(19) **Europäisches Patentamt**
**European Patent Office**
**Office européen des brevets**

(11) **EP 3 091 294 B1**

(12) **EUROPÄISCHE PATENTSCHRIFT**

(45) Veröffentlichungstag und Bekanntmachung des Hinweises auf die Patenterteilung:
**28.02.2018   Patentblatt 2018/09**

(51) Int Cl.:
**F24D 10/00** *(2006.01)*    **F24D 11/00** *(2006.01)*
**F24D 19/10** *(2006.01)*

(21) Anmeldenummer: **16166394.3**

(22) Anmeldetag: **21.04.2016**

(54) **VERFAHREN UND VORRICHTUNG ZUR STEUERUNG DER WÄRMEVERSORGUNG VON WÄRMEVERBRAUCHERN**

METHOD AND DEVICE FOR CONTROLLING THE SUPPLY HEAT OF HEAT CONSUMERS

PROCEDE ET DISPOSITIF DE COMMANDE DE L'ALIMENTATION EN CHALEUR DE CONSOMMATEURS THERMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2015   DE 102015107214**

(43) Veröffentlichungstag der Anmeldung:
**09.11.2016   Patentblatt 2016/45**

(73) Patentinhaber: **Techem Energy Services GmbH 65760 Eschborn (DE)**

(72) Erfinder:
• **Kähler, Arne**
  **61350 Bad Homburg (DE)**

• **Ohl, Jochen**
  **64823 Groß-Umstadt (DE)**

(74) Vertreter: **Keil & Schaafhausen Patent- und Rechtsanwälte PartGmbB Friedrichstrasse 2-6 60323 Frankfurt am Main (DE)**

(56) Entgegenhaltungen:
**EP-A1- 1 645 928      WO-A2-03/052536 DE-A1- 19 604 189      DE-A1- 19 836 842 US-A- 5 479 358**

**Beschreibung**

Die Erfindung betrifft ein Verfahren und eine Vorrichtung zur Steuerung bzw. Regelung der Wärmeversorgung von Wärmeverbrauchern in Gebäuden einer Siedlung mittels eines zentralen Wärmeversorgers entsprechend dem Oberbegriff der Ansprüche 1 und 8, insbesondere einer Anlage zur gekoppelten Erzeugung von Strom und Wärme.

Bei einer solchen Anlage kann es sich insbesondere um ein sog. Kraft-Wärme-Kopplungs-Kraftwerk (KWK-Anlage) oder ein Blockheizkraftwerk handeln, das Strom erzeugt, der in ein öffentliches Stromverteilernetz eingespeist und/oder in Gebäuden der Siedlung direkt verbraucht wird und gleichzeitig die bei der Stromerzeugung anfallende Abwärme zur Wärmeversorgung von Wärmeverbrauchern in Gebäuden der Siedlung nutzt, die mehr oder weniger in der Nähe des Kraftwerks angeordnet sind. Es kann sich bei dem Kraftwerk auch um ein sog. Blockheizkraftwerk handeln, das in größeren Gebäudeeinheiten, wie bspw. Krankenhäusern, großen Büro- und Verwaltungskomplexen, Mietwohnungskomplexen oder dergleichen, vorgesehen ist und Strom und Wärme erzeugt, wobei auch ein solcher Gebäudekomplex als Siedlung im Sinne der vorstehenden Anmeldung verstanden werden soll. In einem solchen Fall können als Gebäude einzelne Gebäudekomplexe verstanden werden, die versorgungstechnisch bspw. durch das Vorsehen verschiedener Zentralheizungsanlagen voneinander getrennt sind.

In dem erfindungsgemäß vorgeschlagenen Wärmeversorger wird bei der Wärmeerzeugung ein Wärmeträger erhitzt und über ein Wärmeverteilungsnetz den Wärmeverbrauchern in den Gebäuden der Siedlung mit einer Netz-Vorlauftemperatur $VLT_{Netz}$ zugeführt. Das Wärmeverteilungsnetz kann bspw. eine Nahwärmeleitung (insbesondere im Falle eines großen Gebäudekomplexes mit mehreren, vorzugsweise unabhängig voneinander betreibbaren Wärmeverbrauchern wie Gebäudeheizungsanlagen oder eine Fernwärmeleitung (insbesondere im Falle einer mit Wärme versorgten Siedlung aus einer Vielzahl von unabhängigen Gebäuden) sein, die jeweils mit Anschlussstationen ausgestattet sind, welche das Wärmeverteilungsnetz an die einzelnen Gebäude bzw. Gebäudeteile anschließen. Hierbei kann es sich insbesondere um Heizungsanschlussstationen oder Gebäudeanschlussstationen handeln, welche die in dem Wärmeverteilungsnetz angebotene Wärmeleistung, d.h. den erhitzten Wärmeträger, aufnehmen können. Damit wird der in dem zentralen Wärmeversorger erhitzte Wärmeträger über das Wärmeverteilungsnetz von dem Wärmeversorger zu den einzelnen Anschlussstationen geleitet, um von dort aus die Wärmeversorgung der an die Anschlussstationen angeschlossenen Wärmeverbraucher in den Gebäuden oder Gebäudeteilen mit Wärme zu versorgen.

Ein Wärmeverbraucher in einem Gebäude ist insbesondere eine Gebäudeheizungsanlage, welche in mindestens einem Heizkreis angeschlossene Heizkörper- oder Heizflächen zur Beheizung einzelner Räume des Gebäudes aufweist. In einem solchen Heizkreis kann die Heizkreis-Wärmeleistung, bspw. durch Einstellung des Wärmemengenstroms, welcher dem Massestrom des strömenden Heizmittels entspricht, und/oder der Vorlauftemperatur in dem Heizkreis gesondert regelbar sein. Grundsätzlich kommen erfindungsgemäß aber alle Gebäude-Wärmeverbraucher in Frage, welche die Wärme eines erhitzten Wärmeträgers nutzen.

In einem derartigen Wärmeverteilungssystem mit einer Kraft-Wärme-Kopplungs-Anlage, welche Strom in ein öffentliches Stromverteilungsnetz einspeist und/oder lokal verbraucht und Wärme in ein Nah- oder Fernwärmeverteilungsnetz einspeist, besteht immer das Problem, dass die Nachfrage nach Strom und Wärme nicht gleichlaufend sind, sondern üblicherweise verschieden ausfallen. Wenn ein Kraftwerk (KWK-Anlage) aufgrund einer Wärmeanforderung einen Wärmeträger erhitzt, wird dabei zwangsläufig Strom produziert, der in ein öffentliches Stromverteilungsnetz eingespeist werden muss. Aufgrund einer Vielzahl solcher oder ähnlicher, dezentraler Stromerzeuger, die in der letzten Zeit insbesondere auch durch Fotovoltaik-Anlagen gebildet werden, kommt es in den öffentlichen Verteilernetzen teilweise zu einem Überangebot an Strom, der verwertet werden muss. Da das Verwerten des eingespeisten Stromes eine technisch notwendige Anforderung darstellt, kann es sein, dass für das Einspeisen von Strom ein Entgelt anfällt, das an der Strombörse als sog. "Negativer Strompreis" bekannt ist. Umgekehrt kann es sein, dass bei einem hohen Strombedarf, bspw. im Sommer bei dem Betrieb von Klimaanlagen, keine Nachfrage nach Wärmeleistung besteht, sodass zwar Strom produziert werden kann, die erzeugte Wärmeleistung jedoch ungenutzt bspw. über Kühltürme oder andere geeignete Wärmetauscher abgegeben wird.

In diesem Kontext ist aus der DE 100 03 914 A1 ein Verfahren zur Erzeugung und Verteilung von Elektro- und Wärmeenergie aus einer Kraft-Wärme-Kopplung bekannt, bei dem die Elektroenergie als sog. Wärmestrom mit variabler Spannung und/oder variabler Frequenz erzeugt, in ein separates Wärmestromnetz eingespeist, zu den dezentralen aus Wärmestromverbrauchern bestehenden Abnehmern geleitet und mit diesem Strom in einer bei dem dezentralen Abnehmer installierten Heizungsanlage Wärmeenergie erzeugt wird. Diese Lösung schlägt vor, aufgrund einer Wärmeanforderung erzeugten, zu dieser Zeit aber nicht benötigten Strom unmittelbar und dezentral zur Wärmeerzeugung zu nutzen. Hierdurch wird jedoch nur ein Teilaspekt des gesamten Problems adressiert.

Aus der DE 43 21 574 A1 ist ein ähnliches Konzept bekannt, bei dem einem nach dem Prinzip der Kraft-Wärme-Kopplung arbeitenden Heizkraftwerk eine Wärmepumpen-Heizstation zugeordnet ist, um den jahreszeitlich unterschiedlichen Bedarf an Heizwärme, der über das Wärmeangebot aus der stromgeführten Elektroenergieerzeugung des Heizkraftwerkes hinausgeht, durch entsprechendes Betreiben der Wärmepumpen-Heizstation abzudecken. Das Heizkraftwerk und die Wärmepumpen-Heizstation können durch eine gemeinsame Heizstation betrieben werden.

Die in der DE 103 45 580 A1 beschriebene Kraft-Wärme-Kopplungs-Anlage kann in drei unterschiedlichen Betriebsarten betrieben werden: einem wärmegeführten Betrieb bei maximalem elektrischen Wirkungsgrad, einem wärmegeführten Betrieb unter Abdeckung der elektrischen Hauslast oder einem reinen Heizprinzip, wobei die jeweils durch die Kraft-Wärme-Kopplungsanlage erzeugte Strommenge auf den tatsächlichen Strombedarf abgestimmt ist. Hierdurch wird zwar vermieden, dass nicht benötigter Strom erzeugt wird, aber um den Preis, dass im Rahmen der Verbrauchswärmeerzeugung erzeugte Energie nicht genutzt wird.

Die WO 03/052 536 A2 und EP 1 645 928 A1 offenbaren den Oberbegriff der unabhängigen Ansprüche und beschreiben ein Verfahren zur Adaption der Wärmeleistung in Heizungsanlagen mittels einer Wärmeleistungsregelung der Heizungsanlage durch Variation der Vorlauftemperatur. Um die Wärmeleistung besser an den tatsächlichen Wärmebedarf anzupassen, ist eine Versorgungszustandsregelung vorgesehen, wodurch ein den Wärmebedarf der Räume berücksichtigender Gebäudeversorgungszustand als Regelgröße mit einem vorgebbaren Sollwert für den Heizkreis- oder Gebäudeversorgungszustand verglichen und daraus ein Sollwert und/oder Korrekturwert für die Wärmeleistungsregelung ermittelt wird. Der Gebäudeversorgungszustand wird aus den Ventilstellungen von Heizkörperventilen an den Heizkörpern der einzelnen Räume oder durch die im Rahmen einer Heizkostenverteilung gemessene Wärmeabgabe der Heizkörper an die Raumluft ermittelt.

Die US 5,479,358 beschreibt ein urbanes Energiesystem, mit dem thermische Energie wie Kühlwasser, Dampf oder Heizwasser an eine Gemeinschaft verteilt werden soll. Das System ist in der Lage, den Energiebedarf der Gemeinschaft auf Basis von Verbrauchsdaten aus der Vergangenheit vorherzusagen. Während des Betriebs können Abweichungen von dem vorhergesagten Energiebedarf aus dem aktuellen Energiefluss im Vergleich zu dem vorhergesagten Energiebedarf erkannt und berücksichtigt werden. Hierbei wird eine aus Vergangenheitswerten berechnete Prognose korrigiert.

In der DE 196 94 189 A1 wird ein Verfahren zur automatischen Wärmemengenbegrenzung und zur Wärmeleistungsregelung von Fernwärmeanlagen beschrieben, bei dem ein Systemregler ein kontinuierliches Zeitverhalten und eine automatische Sollwerteinstellung aufweist. Mit den Funktionen Wärmemengenbegrenzung und Wärmeleistung realisiert dieser Regler ein Zeitverhalten, mit dem Leistungsspitzen und Leistungsschwankungen verringert werden. Der Regler gleicht automatisch die abnahmebedingten Schwankungen zwischen Minimalwerten und Maximalwerten des Wärmebedarfs aus. Dies erfolgt durch eine automatische Korrektur des eingestellten Sollwertes der Durchflussvolumenregelung.

Aus der DE 198 36 842 A1 sind Energieverbrauchseinrichtungen bekannt, die jeweils einen Energiespeicher und einrichtungseigene Steuermittel auf aufweisen. Diese sind an ein gemeinsames Versorgungsnetz sowie an eine gemeinsame Zentrale angeschlossen. Die Zentrale erfasst und analysiert den von jeder Energieverbrauchseinrichtung abgerufenen Energiebedarf und erstellt für einen Zeitraum von 24 Stunden ein entsprechendes Bedarfsprofil. Ferner werden die Ladezustände der Energiespeicher erfasst. Auf der Basis des Bedarfsprofils und der aktuellen Lastzustände entwickelt die Zentrale eine Schaltsequenz und optimiert diese dahingehend, dass unter Erfüllung der Bedarfsanforderungen Verbrauchsspitzen minimiert werden. Die Zentrale schaltet die Energieverbrauchseinrichtungen entsprechend, wobei die einrichtungseigenen Steuermittel vorübergehend umgangen werden.

Aufgabe der Erfindung ist es, ein Verfahren und eine Vorrichtung vorzuschlagen, bei welchen der Wärmebedarf mehrerer Gebäude in einer Siedlung genauer ermittelt verwenden kann. Insbesondere bei Anlagen zur Kraft-Wärme-Kopplung können so die erzeugte Strommenge und die erzeugte Wärmemenge in einem Kraftwerk zur gekoppelten Erzeugung von Strom und Wärme besser aufeinander abgestimmt werden.

Diese Aufgabe wird erfindungsgemäß mit den Merkmalen der Ansprüche 1 und 8 gelöst. Bei dem Verfahren der Eingangs genannt Art ist insbesondere vorgesehen, dass für ein an das Wärmeverteilungsnetz angeschlossenes Gebäude ein den Wärmebedarf anzeigender Gebäudeversorgungszustand $GVZ_i$ ermittelt wird, dass unter Verwendung der Gebäudeversorgungszustände $GVZ_i$ der in der Siedlung zusammengefassten Gebäude ein den Wärmebedarf der gesamten Siedlung anzeigender Siedlungsversorgungszustand $SVZ$ ermittelt wird und dass der zentrale Wärmeversorger in Abhängigkeit von diesem Siedlungsversorgungszustand gesteuert wird. Hierdurch ist es möglich, den zentralen Wärmeversorger unter Berücksichtigung des tatsächlichen Wärmebedarfs der Gebäude bzw. der Wärmeverbraucher in den Gebäuden der Siedlung zu betreiben. Diese Informationen liegen bisher bei einem zentralen Wärmeerzeuger in einer Siedlung typischer Weise nicht vor und können bei der Abstimmung von Strom- und Wärmeerzeugung mit häufig verschiedenen, teilweise entgegengesetzten Anforderungsprofilen nicht verwendet werden. Indem der tatsächliche aktuelle Wärmebedarf bekannt ist, besteht ein höherer Steuer- bzw. Regelspielraum, um die Anlagen unter ökonomisch-ökologischen Gesichtspunkten mit einem insgesamt höheren Nutzungsgrad zu betreiben.

Ein Gebäudeversorgungszustand $GVZ_i$ wird vorzugsweise aus Messdaten zur Heizkostenverteilung ermittelt. Eine besonders bevorzugte Ermittlung des Gebäudeversorgungszustands (und vorzugsweise auch des Siedlungsversorgungszustands) kann einfacher Weise unter Anwendung von Fuzzy-Regeln erfolgen. Die Erfindung ist jedoch nicht grundsätzlich auf die Anwendung von Fuzzy-Logik beschränkt, da es für den Fachmann auch möglich ist, das Ergebnis der Fuzzy-Logik durch andere Regel- oder Steueralgorithmen abzudecken, mit denen sich der Kerngedanke der vorliegenden Erfindung auch verwirklichen lässt. Gleichwohl stellt die beschriebene Anwendung der Fuzzy-Logik, und insbesondere auch der konkret beschriebenen Struktur der Fuzzy-Logik, eine erfindungsgemäß besonders bevorzugte und bisher in dieser Kombination nicht bekannte Ausführungsform dar, die bei einfacher Parametrierbarkeit des Regel- oder Steueralgorithmus und einfacher Parameterstruktur sehr gute Betriebsergebnisse der Regelung bzw. Steuerung des zentralen Wärmeversorgers in dem Siedlungsgebiet erreicht.

Für die Ermittlung des Gebäudeversorgungszustands können die Fuzzy-Regeln im Wesentlichen auf den einzelnen Heizflächen zugeordneten Heizflächenversorgungszuständen aufsetzen, die grundsätzlich auf dem Verhältnis des aktuellen Massestroms des Heizmediums durch die Heizfläche, die insbesondere durch klassische Heizkörper gebildet sein können, im Vergleich zu einem maximalen Nennmassestrom basieren. Hierdurch wird der aktuelle Wärmebedarf (entsprechend dem aktuellen Massestrom) der Heizfläche in Relation zu dem grundsätzlich verfügbaren Wärmeangebot bei der aktuellen Vorlauftemperatur des Heizmediums gesetzt.

Wenn beispielhaft der (Durchfluss-)Massestrom durch die Heizfläche niedrig ist (im Vergleich zu einem maximalen (Durchfluss-)Nennmassestrom), zeigt dies an, dass die Heizfläche zur Beheizung des Raumes nur einen Teil der angebotenen Wärmeleistung (Wärmeangebot) des Heizmediums benötigt. Dies deutet also darauf hin, dass die Heizfläche gut mit Wärme versorgt ist, d.h. der aktuelle Wärmebedarf des Raumes im Vergleich zum Wärmeangebot nicht sehr hoch ist. Diese qualitative Aussage spiegelt sich quantitativ in einem entsprechenden Heizflächenversorgungszustand wieder. Umgekehrt bedeutet ein (im Vergleich zu einem maximalen Nennmassestrom, d.h. an diesen herankommenden) hoher Durchfluss-Massestrom, dass der Raum das durch das Heizmedium zur Verfügung gestellte Wärmeangebot aktuell benötigt. Entsprechend hoch ist der aktuelle Wärmebedarf. Auch dies spiegelt sich quantitativ in einem entsprechenden Heizflächenversorgungszustand wieder.

Konkret können die Heizflächenversorgungszustände aus (zuvor bspw. in einem Prüfstand anhand von Mustern der konkreten Heizkörper festgelegten) Kennlinien für einen Heizkörpertyp ermittelt werden, bspw. aufgrund der Hubstellung des Heizkörperventils oder einer aus der Heizkörpertemperatur abgeleiteten Größe wie in der WO 03/052536 A2 oder der EP 1 933 220 B1 ausführlich erläutert. Es ist auch möglich, den Heizflächenversorgungszustand entsprechend der Offenbarung in der EP 2 009 536 B1 als Heizleistungsreserve bzw. Betriebsleistungsverhältnis zu bilden. Die Heizleistungsreserve wird dabei als Größe verstanden, welche die Differenz zwischen der Wärmeleistung der Heizfläche bei aktueller Vorlauftemperatur und Nennmassestrom und aktueller Wärmeleistung, wie sie bei der Heizkostenverteilung gemessen wird, in das Verhältnis zu der Wärmeleistung der Heizfläche bei aktueller Vorlauftemperatur und Nennmassestrom setzt. Diese Wärmeleistung der Heizfläche bei aktueller Vorlauftemperatur und Nennmassestrom kann unter Verwendung der für jeden Heizkörper bekannten und von dem Hersteller der Heizkörper veröffentlichten Kenndaten des Heizkörpers und Kenntnis der aktuellen Vorlauftemperatur bestimmt werden. Sie zeigt die bei der aktuellen Vorlauftemperatur maximal mögliche Heizleistung an, die sich bei dem Nennmassestrom ergibt.

Die einzelnen Heizflächenversorgungszustände können dann mittels Fuzzy-Logik typischer Zugehörigkeitsfunktionen bewertet werden, um daraus einen sämtliche Heizflächenversorgungszustände berücksichtigenden Gebäudeversorgungszustand zu ermitteln und einen entsprechenden Wert zuzuweisen. Die Anwendung der Fuzzy-Logik ist dem Fachmann grundsätzlich bekannt und bspw. in der WO 03/052536 A2 auch konkret beschrieben.

Für die Ermittlung des Siedlungsversorgungszustands können erfindungsgemäß, wie dies auch für die Ermittlung des Gebäudeversorgungszustand auf Grundlage der einzelnen Heizflächenversorgungszustände in analoger Weise möglich ist, die einzelnen Gebäudeversorgungszustände separat für Gebäudeunterversorgungszustände und Gebäudeüberversorgungszustände gemittelt werden.

Der Siedlungsversorgungszustand beschreibt den Wärmebedarf bzw. Wärmeversorgungszustand der in einer Siedlung zusammengefassten Gebäude als vorzugsweise dimensionslose Größe, die einen ersten Wertebereich für eine Überversorgung und einen zweiten Wertebereich für eine Unterversorgung aufweist. Diese sind grundsätzlich konfigurierbar; eine sinnvolle Skala bildet den Siedlungsunterversorgungszustand in einem Wertebereich von -100 bis 0 und Siedlungsüberversorgungszustand in einem Wertebereich von größer 0 bis 100 ab, wobei betragsmäßig kleine Versorgungszustände eine dem Wärmebedarf in etwa entsprechende Wärmeversorgung anzeigen. Für die Gebäudeversorgungszustände kann vorzugsweise dieselbe Skala verwendet werden. Diese Skala ist besonders bevorzugt; die Erfindung kann grundsätzlich jedoch mit einer beliebigen dimensionslosen bzw. dimensionsbehafteten Skala für den Siedlungs- und/oder den Gebäudeversorgungszustand realisiert werden.

Für die Berechnung des Siedlungsversorgungszustands können erfindungsgemäß also die Gebäudeunterversorgungszustände (entsprechend dem die Unterversorgungszustände auf der Skala anzeigenden Wertebereich) und die Gebäudeüberversorgungszustände (entsprechend dem die Überversorgungszustände auf der Skala anzeigenden Wertebereich) bspw. als arithmetischer oder gewichteter Mittelwert zusammengefasst werden. Die separate Mittelung hat den Vorteil, dass Gebäude mit einer Überversorgung und einer Unterversorgung sich nicht gegenseitig wegmitteln, so dass in der Summe ein eine normale oder gute Wärmeversorgung der Gebäude anzeigender Mittelwert zustande kommt, obwohl viele Gebäude überversorgt und viele andere Gebäude unterversorgt sind. Gleichzeitig wird durch die Mittelung aller Gebäudeunter- und Gebäudeüberversorgungszustände kein Gebäudeversorgungszustand bei der Ermittlung des Siedlungsversorgungszustands vernachlässigt, im Gegensatz zu einer Bestimmung des Siedlungsversorgungszustands aus nur einer Auswahl bestimmter Gebäudeversorgungszustände.

Je nach dem Wert des Mittelwerts der jeweiligen Gebäudeversorgungszustände können bei der Anwendung der Fuzzy-Logik in einer Fuzzyfizierung bestimmten vordefinierten Zugehörigkeitsfunktionen gewisse Werte zugewiesen werden, die den Grad verschiedener Versorgungszustände charakterisieren. Entsprechend einer Regelbasis für eine Fuzzy-Inferenz werden dann aus den Zughörigkeitsfunktionswerten der Mittelwerte der Gebäudeüberversorgungstände und der Gebäudeunterversorgungszustände in der Fuzzy-Inferenz Zugehörigkeitswerte für den Siedlungsversorgungszustand ermittelt, der durch eine Defuzzyfizierung einen Wert für den Siedlungsversorgungszustand liefert. Die Verfahren für eine Defuzzyfizierung sind grundsätzlich bekannt und müssen daher im Rahmen dieses Textes nicht genauer beschrieben werden. Bspw. kann eine Schwerpunktmethode zur Bewertung der Werte der jeweiligen Zugehörigkeitsfunktionen verwendet werden.

Im Gegensatz zu geschlossenen Regel- oder Steueralgorithmen, die Erfindungsgemäß auch angewendet werden könnten, bietet die Anwendung der Fuzzy-Logik mit der vorbeschriebenen logischen Struktur den erheblichen Vorteil, dass Zwischenergebnisse der Fuzzy-Logik einer intuitiven Bewertung zugänglich sind und so eine Änderung der Regel- oder Steuercharakteristik auf intuitive Weise möglich ist. Daher wird eine Fuzzy-Logik zur Ermittlung der Siedlungsversorgungszustände (und vorzugsweise auch der Gebäudeversorgungszustände) erfindungsgemäß bevorzugt. Die Erfindung lässt sich jedoch auch mit anderen Regel- oder Steueralgorithmen umsetzen.

Gemäß einer besonders bevorzugten Ausführungsform des erfindungsgemäß vorgeschlagenen Verfahrens kann bei der Ermittlung des Siedlungsversorgungszustands $SVZ$ die Differenz der Netz-Vorlauftemperatur $VLT_{Netz}$ des Wärmeträgers, auf die der Wärmeträger durch den zentralen Wärmeversorger erhitzt bzw. mit der der Wärmeträger im Wärmeverteilungsnetz verteilt wird, und der Vorlauftemperatur in einem Heizkreis $VLT_{HK}$ eines Gebäudes bzw. mehrerer oder aller Gebäude der Siedlung als Vorlauftemperaturdifferenz $\Delta VLT_{Netz-HK}$ mit berücksichtigt werden. Diese auch als Netz-Übertemperatur bezeichnete Differenz ist ein Maß dafür, wie hoch das Potential für eine Energieeinsparung durch Absenkung der Netz-Vorlauftemperatur $VLT_{Netz}$ ist, weil diese Differenz den Temperaturüberschuss im Wärmeverteilungsnetz anzeigt.

In einer einfachsten Lösung kann bspw. diese Temperaturdifferenz $\Delta VLT_{Netz-HK,i}$ für jedes Gebäude i bestimmt und die kleinste Temperaturdifferenz ausgesucht werden, die das Gebäude mit dem größten Wärmebedarf relativ zu der Netz-Vorlauftemperatur $VLT_{Netz}$ anzeigt. Dies kann eine Grenze darstellen, wie weit die Netz-Vorlauftemperatur $VLT_{Netz}$ reduziert werden kann.

Sinnvoller ist es erfindungsgemäß allerdings, einen Mittelwert der Temperaturdifferenz $\Delta VLT_{Netz-HK}$ über alle Temperaturdifferenzen $\Delta VLT_{Netz-HK,i}$ der jeweiligen Gebäude zu bilden, weil dieser die Gesamtsituation besser wiederspiegelt. Um starke Unterversorgungszustände im Wärmeverteilungsnetz zu vermeiden, bietet sich eine gewichtete Mittelwertbildung an, bei der kleine Temperaturdifferenzen $\Delta VLT_{Netz-HK,i}$ stärker gewichtet werden als große Tempera- turdifferenz $\Delta VLT_{Netz-HK,i}$, weil bei kleinen Temperaturdifferenzen $\Delta VLT_{Netz-HK,i}$ der Spielraum für eine Absendung der Netz-Vorlauftemperatur $VLT_{Netz}$ ohne Komforteinbußen entsprechend kleiner ist. Die Gewichtung kann bevorzugter Weise als umgekehrt lineare Abhängigkeit von der Temperaturdifferenz $\Delta VLT_{Netz-HK,i}$ gebildet werden.

Eine erfindungsgemäß bevorzugte Möglichkeit zur Berücksichtigung dieser Vorlauftemperaturdifferenz $\Delta VLT_{Netz-HK}$, sei es als Einzelwert eines Gebäudes oder als Mittelwert, bietet die Einbindung dieser Werte in die Fuzzy- Logik zur Ermittlung des Siedlungsversorgungszustands $SVZ$. Dabei können dem Wert der Vorlauftemperaturdifferenz $\Delta VLT_{Netz-HK}$ Werte von Zugehörigkeitsfunktionen zugeordnet werden, die in der Fuzzy-Inferenz neben den Werten der Zugehörigkeitsfunktionen der vorzugsweise Mittelwerte der Gebäudeüber- und der Gebäudeunterversorgungszustände GueVZ und GuVZ zur Ermittlung von Zugehörigkeitswerten des Siedlungsversorgungszustands mit herangezogen werden. Ggf. kann dieses System auch durch weitere sinnvolle Eingaben ergänzt werden.

Dieses Vorgehen ist besonders einfach möglich, wenn der Siedlungsversorgungszustand $SVZ$ und/oder der Gebäudeversorgungszustand $GVZ_i$ erfindungsgemäß unter Anwendung einer Fuzzy-Logik ermittelt werden. Ein sinnvoller Weg hierfür wurde vorstehend bereits ausführlich beschrieben. Die Anwendung der Fuzzy-Logik ist gerade in diesem Anwendungsfall besonders sinnvoll, weil eine geänderte Gewichtung einzelner Werte in dem Steuerprozess eine einfache, auch von einem Endnutzer grundsätzlich verstehbare Konfigurationsmöglichkeit bietet, da den einzelnen Zugehörigkeitsfunktionen allgemein verstehbare Beschreibungen zugeordnet werden können, die eine intuitive Bewertung ermöglichen. Insofern kann erfindungsgemäß eine Konfigurierbarkeit sogar durch den Endnutzer, in diesem Fall bspw. den Betreiber des zentralen Wärmeversorgers, vorgesehen werden. Dies kann bspw. dadurch erfolgen, dass der Endnutzer in der Fuzzy-Inferenz die Bewertung der Kombinationen der Zugehörigkeitsfunktionswerte durch Auswahl der jeweils zugewiesenen Beschreibungen des zu bildenden Zugehörigkeitsfunktionswerts auswählen kann, wobei es erfindungsgemäß besonders sinnvoll ist, hier bestimmte (technisch nicht sinnvolle) Auswahlmöglichkeiten zu sperren.

Erfindungsgemäß kann bei der konkreten Umsetzung des Verfahrens vorgesehen werden, zur Steuerung des zentralen Wärmeversorgers in Abhängigkeit von dem Siedlungsversorgungszustand $SVZ$ die Abweichung $\Delta SVZ$ des Siedlungsversorgungszustands $SVZ$ zu einem vorgegebenen, ggf. einstellbaren, Sollwert des Siedlungsversorgungszustands $XS_{SVZ}$ zu ermitteln und abhängig von dem Wert der Abweichung $\Delta SVZ$ eine Netz-Vorlauftemperaturänderung $\Delta VLT_{Netz}$ für die Netz-Vorlauftemperatur $VLT_{Netz}$ zu bestimmen, auf die der zentrale Wärmeversorger den Wärmeträger in dem Wärmeverteilungsnetz erwärmt. Statt der Netz-Vorlauftemperaturänderung $\Delta VLT_{Netz}$ kann auch die Netz-Vorlauftemperatur $VLT_{Netz}$ als Absolutwert bestimmt werden.

Einfacher Weise kann für Abweichung $\Delta SVZ$ die Differenz aus dem vorgegebenen bzw. eingestellten Sollwert des Siedlungsversorgungszustands $XS_{SVZ}$ und dem aktuell ermittelten Siedlungsversorgungszustand $SVZ$ gebildet und die Netz-Vorlauftemperatur $VLT_{Netz}$ proportional zu der Differenz $\Delta SVZ$ des Siedlungsversorgungszustands geändert werden, vorzugsweise durch Vorgabe einer Netz-Vorlauftemperaturänderung $\Delta VLT_{Netz}$ gegenüber der aktuellen Netz-Vorlauftemperatur $VLT_{Netz}$ oder aber durch eine direkte Vorgabe der angepassten bzw. wie in diesem Text beschrieben optimierten Netz-Vorlauftemperatur $VLT_{Netz}$. Die proportionale Änderung kann direkt proportional sein, wenn wie zuvor beispielhaft erläutert, ein höherer Wert des Siedlungsversorgungszustands ein höheres Wärmeangebot in dem Wärmeverteilungsnetz (und damit einen geringeren Wärmebedarf) anzeigt. Bei umgekehrter Definition könnte eine umgekehrt proportionale Abhängigkeit gewählt werden. Grundsätzlich kann natürlich auch jede andere funktionale Abhängigkeit gewählt werden.

So wird eine Netz-Vorlauftemperaturänderung $\Delta VLT_{Netz,SVZ}$ in zunächst alleiniger Abhängigkeit von dem Siedlungsversorgungszustand, auch als Netz-Vorlauftemperatur-Änderungspotential bezeichnet, ermittelt, die in einer einfachen Ausführungsform mit der letztlich in der Steuerung angewendeten Netz-Vorlauftemperaturänderung $\Delta VLT_{Netz}$ gleichgesetzt werden kann, die die von dem zentralen Wärmeerzeuger erzeugte Netz-Vorlauftemperatur $VLT_{Netz}$ beeinflusst.

Vorzugsweise kann erfindungsgemäß vorgesehen sein, dass eine Änderung der Netz-Vorlauftemperatur $VLT_{Netz}$ um die Netz-Vorlauftemperaturänderung $\Delta VLT_{Netz,SVZ}$ (Änderungspotenzial) nur vorgenommen wird, wenn die Differenz $\Delta SVZ$ des Siedlungsversorgungszustands einen gewissen Schwellenwert übersteigt, der für positive und negative Abweichungen gleich oder verschieden sein kann. Hierdurch wird eine Hysteresefunktion eingeführt, die kleinschrittige Änderungen der Netz-Vorlauftemperatur $VLT_{Netz}$ vermeidet und damit zur Regelungsstabilität beiträgt.

In Weiterbildung des vorbeschriebenen Steuerungskonzepts kann vorgesehen sein, dass die Abhängigkeit der Netz-Vorlauftemperaturänderung $\Delta VLT_{Netz}$ in Abhängigkeit der Außentemperatur $\vartheta_A$ in der Siedlung als Kennlinie der Netz-Vorlauftemperaturänderung $\Delta VLT_{Netz}$ gelernt wird und für eine aktuelle Außentemperatur $\vartheta_A$ eine Netz-Vorlauftemperaturänderung $\Delta VLT_{Netz}$ aus der Kennlinie abgelesen und als Basiswert für die Steuerung bzw. Regelung des zentralen Wärmeversorgers verwendet wird. Diese Kennlinie kann fortlaufend aktualisiert werden, um sich geänderten Bedingungen in der Siedlung anzupassen. Durch eine an die Praxis angepasste Auswahl von Basiswerten lässt sich erfindungsgemäß eine sinnvolle Vorsteuerung der Anlage erreichen, so dass weniger Korrekturbedarf besteht und die Steuerung bzw. Regelung ein regelungstechnisch einfach handhabbares Kleinsignalverhalten aufweist.

Da in dieser zuvor beschriebenen, bevorzugten Ausführungsform der aktuelle Siedlungsversorgungszustand $SVZ$ aus Daten des Wärmeverteilungsnetzes bestimmt und mit einem Sollwert verglichen wird, wird ein Regelkreis gebildet, sodass die Steuerung im regelungstechnischen Sinne eine Regelung des Siedlungsversorgungszustands $SVZ$ ist. Sofern die Anlage dagegen - ohne direkte Rückkopplung - ausschließlich unter Verwendung der zuvor erlernten Basiswerte geführt wird, handelt es sich im regelungstechnischen Sinne um eine Steuerung des Siedlungsversorgungszustands $SVZ$, da die direkte und unmittelbare Rückkopplung fehlt.

Um die Anlage weiter zu optimieren ist erfindungsgemäß vorgesehen, dass die Netz-Vorlauftemperaturänderung $\Delta VLT_{Netz}$ zusätzlich zu der Abhängigkeit von dem Siedlungsversorgungszustand $SVZ$ auch in Abhängigkeit von ggf. der Netz-Vorlauftemperatur $VLT_{Netz}$ und einer Speichermanagementvorgabe $SPMV$ ermittelt wird, welche den Ladezustand von in dem Wärmeverteilungsnetz angeschlossenen zentralen, d.h. in der Siedlung separat vorgesehenen, und/oder dezentralen, d.h. in den Heizkreis eines Gebäudes eingebundenen, Wärmespeichern berücksichtigt.

Eine Berücksichtigung des Aktuellwertes der Netz-Vorlauftemperatur $VLT_{Netz}$ kann sinnvoll sein, weil unabhängig von einem den Wärmebedarf der Siedlung widerspiegelnden Siedlungsversorgungszustand $SVZ$ bzw. einer in alleiniger Abhängigkeit von dem Siedlungsversorgungszustand $SVZ$ ermittelten Netz-Vorlauftemperaturänderung $\Delta VLT_{Netz,SVZ}$ durch die Berücksichtigung der aktuellen Netz-Vorlauftemperatur $VLT_{Netz}$ der Änderungsspielraum bewertet werden kann. Diese Berücksichtigung ist optional und kann - ohne wesentliche Vorteile der Erfindung aufzugeben - auch weggelassen werden.

Um eine Leistungssteigerung des Heizkörpers um $\dfrac{\Delta \dot{Q}}{\dot{Q}_N} = 0,1$ bei einer niedrigen Vorlauftemperatur zu erreichen, ist (bei gleichem Massestrom) eine größere Temperaturanhebung erforderlich als bei einer hohen Vorlauftemperatur. Aus einem Heizkörperdiagramm ergibt sich bspw., dass - um ausgehend von einer Vorlauftemperatur VLT₁ = 46,7 und $\dfrac{\dot{Q}_1}{\dot{Q}_N} = 0,3$ eine Leistung von $\dfrac{\dot{Q}_2}{\dot{Q}_N} = 0,4$ zu erreichen - eine Vorlauftemperaturanhebung um $\Delta VLT = 6,9K$ erforderlich ist. Beträgt die Ausgangsvorlauftemperatur VLT1 = 78,5 und $\dfrac{\dot{Q}_1}{\dot{Q}_N} = 0,8$, so ist eine Anhebung um $\Delta VLT$

= 5,8K erforderlich um eine Leistung von $\dfrac{\dot{Q}_2}{\dot{Q}_N} = 0,9$ zu erreichen (Index N: Nennpunkt).

Besonders sinnvoll ist es auch, die Ladezustände von vorhandenen zentralen oder dezentralen Wärmespeichern in dem Wärmeverteilungsnetz zu berücksichtigen und durch die Speichermanagementvorgabe vorzugeben, ob diese Speicher sinnvoller Weise geladen oder entladen werden sollen. So ist es bspw. sinnvoll, möglichst eine gewisse Restkapazität an gespeicherter Wärme in dem Wärmeverteilungsnetz als Reserve vorzusehen, mit der bestimmte Wärmebedarfspeaks, d.h. kurze Zeiten mit einem erhöhten Wärmebedarf, ausgeglichen werden können, ohne dass die Steuerung des zentralen Wärmeversorgers reagieren muss. Andererseits steht bei einem hohen Speicherladezustand zu befürchten, dass die Wärmeverluste durch Abkühlung steigen, weil die gespeicherte Wärme nicht genutzt werden kann.

Erfindungsgemäß vorgeschlagene zentrale Wärmespeicher können insbesondere wärmeisolierte Tanks oder unterirdische Wärmespeicher (wie Erdwärmespeicher) sein. Als dezentrale Wärmespeicher kommen erfindungsgemäß insbesondere gebäudeinterne Wärmespeicher, wie Trinkwasserspeicher, oder gebäudeintegrierte Wärmespeicher, wie thermoaktive Bauteile, in Frage.

Neben diesen nur die Wärmeversorgung berücksichtigenden Gesichtspunkten ist es sinnvoll, auch weitere wirtschaftliche Daten aus dem Betrieb des zentralen Wärmeversorgers zu berücksichtigen. Dazu zählen insbesondere ein (bspw. der aktuelle) Belastungsgrad $Phi_{KWK}$ des zentralen Wärmeversorgers und/oder der Verkaufserlös $SP$ (Strompreis) für von der Kraft-Wärme-Kopplungsanlage als Wärmeversorger erzeugten und in das allgemeine Stromnetz eingespeiste Strom. Hierbei hat es sich als besonders effizient erwiesen, den Belastungsgrad $Phi_{KWK}$ des zentralen Wärmeversorgers und/oder den Verkaufserlös $SP$ für Strom bei der Bestimmung der Speichermanagementvorgabe, insbesondere zusätzlich zu dem Speicherladezustand der zentralen und/oder dezentralen Wärmespeicher, zu berücksichtigen.

Der Belastungsgrad $Phi_{KWK}$ des zentralen Wärmeversorgers gibt bspw. an, ob der zentrale Wärmeversorger hoch, mittel oder gering belastet ist. Bei einem Kraftwerk zur gekoppelten Erzeugung von Strom und Wärme (im Sinne einer KWK-Anlage) kann der Belastungsgrad bei modulierenden Anlagen bspw. als mittlerer (gemittelter) Modulationsgrad angegeben werden. Modulierende Anlagen können ihre Leistung zumindest in Teilbereichen von bspw. 30% bis 100% der Nennleitung stufenlos verändern. Der Modulationsgrad ist dann die aktuelle Leistung bezogen auf die Nennleistung. Bei nicht modulierenden Anlagen kann der Belastungsgrad $Phi_{KWK}$ durch das Verhältnis der Betriebszeit zu dem Betrachtungszeitraum oder das Verhältnis der erzeugten mittleren elektrischen und/oder thermischen Leistung zu der elektrischen und/oder thermischen Nennleistung definiert werden. Die Definition kann auch als Kombination der vorgenannten Möglichkeiten erfolgen. Der Belastungsgrad wird im Sinne einer Betriebsreserve verwendet: wenn der Belastungsgrad hoch ist, ist eine weitere Leistungssteigerung meist nicht mehr sinnvoll, da die KWK-Anlage keine höhere Leistung mehr zur Verfügung stellen kann. Dies kann bspw. wieder durch eine geeignete Fuzzy-Logik bewertet werden.

Bei KWK-Anlagen, d.h. einem zentralen Wärmeversorger zur gekoppelten Erzeugung von Strom und Wärme, stellt ein wesentlicher Aspekt zur wirtschaftlichen Nutzung auch die Berücksichtigung des Strompreises $SP$ dar. Technisch gesehen ist der Strompreis $SP$ ein Maß für das derzeit vorhandene Stromangebot im Vergleich zu dem Strombedarf, beispielsweise ein lokales oder auch ein globales Stromangebot. Lokal bedeutet in diesem Zusammenhang eine Region, in der der Strom in einem üblichen öffentlichen Leitungsnetz - ohne die Verwendung von großen Stromtrassen zum Transport von in einer Region vorhandenem Strom in eine andere Region mit Strombedarf, bspw. also von Norddeutschland nach Süddeutschland - verteilt werden kann.

Bei einem hohen Strompreis, der in Rahmen dieses Textes technisch als ein hoher Strombedarf verstanden werden soll, ist es wirtschaftlich und ökologisch sinnvoll, durch die KWK-Anlage möglichst viel Strom zu produzieren und in das öffentliche Leitungsnetz einzuspeisen. Wirtschaftlich gesehen wird dadurch die Rendite der KWK-Anlage erhöht, was sich auch für den Gebäudenutzer in verminderten Nebenkosten für Wärme und Strom niederschlagen kann. Ökologisch gesehen wird der Strom dann (und ggf. dort) produziert, wann (und wo) er gebraucht wird. Dies entlastet die großen Stromtrassen der Stromverteilungsnetze und erhöht die Effizienz der Stromnutzung. Dabei wird natürlich auch Wärme produziert. Kann in diesem Fall die produzierte Wärme nicht abgenommen werden, so ist der Wärmespeicher möglichst zu beladen.

Bei niedrigen oder sogar negativen Strompreisen (letztere stehen technisch für das Problem, bspw. durch regenerative Stromerzeuger produzierten Strom, im Stromnetz zu verbrauchen oder zwischen zu speichern, damit das Stromnetz nicht zusammenbricht) soll durch die KWK-Anlage dagegen so wenig Strom wie möglich produziert werden. Damit steht aber auch nur ein geringes Wärmeangebot zur Verfügung. In diesem Fall sollten Wärmespeicher so weit wie möglich entladen werden, um ein zusätzliches Wärmeangebot als zentrale Wärmespeicher in das Wärmeverleitungsnetz (Nah- oder Fernwärmenetz) oder als dezentrale Wärmespeicher in den Heizkreis eines Gebäudes einzuspeisen, und die Netz-Vorlauftemperatur $VLT_{Netz}$ sollte möglichst abgesenkt werden.

Diese Strategie spiegelt sich in der Speichermanagementvorgabe wieder, die daher sinnvoller Weise bei der Ermittlung der geeigneten Netz-Vorlauftemperaturänderung $\Delta VLT_{Netz}$ berücksichtigt wird. Auf diese Weise kann der Speicherladezustand der Wärmespeicher berücksichtigt werden, ohne dass unbedingt in die Steuerung der einzelnen Wärmespeicher eingegriffen werden muss, weil die Speicher üblicher Weise eine autarke Steuerung oder Regelung aufweisen, die bei erhöhtem Wärmebedarf Wärme abgeben und bei erhöhtem Wärmeangebot Wärme speichern. Natürlich ist es auch möglich und erfindungsgemäß besonders bevorzugt, durch konkrete Speichermanagementvorgaben an die Steuerungen oder Regelungen einzelner Wärmespeicher deren Verhalten gezielt zu beeinflussen und/oder deren Steuerverhalten zu übernehmen. Dies ist besonders vorteilhaft, weil sich so ein in sich abgestimmtes Regel- und Steuerungskonzept für die gesamte Siedlung ergibt.

Daher ist es sinnvoll, bei der Ermittlung der Speichermanagementvorgabe $SPMV$ auch den Strompreis $SP$ als technische Maßgröße für den Strombedarf respektive das Stromüberangebot zu verwenden.

Die Speichermanagementvorgabe $SPMV$ kann dazu erfindungsgemäß ggf. für alle in der Siedlung vorhandenen Wärmespeicher jeweils als einzelne Speichermanagementvorgabe $SPMV_j$ für einen Wärmespeicher, d.h. einen zentralen Wärmespeicher oder einen dezentralen, bspw. in ein Gebäude zur Warmwasserversorgung integrierten Wärmespeicher, ermittelt und der Steuerung des Wärmespeichers (über eine der Kommunikationsschnittstellen) mitgeteilt werden. Damit kann die Steuerung dieses Wärmespeichers den Wärmespeicher entsprechend der Speichermanagementvorgabe $SPMV_j$ für diesen Wärmespeicher so steuern, dass der Wärmespeicher gezielt in dem Wärmeverteilungsnetz angebotene Wärme speichert oder bei Wärmebedarf in das Wärmeverteilungsnetz abgibt.

Erfindungsgemäß können auch die Netz-Vorlauftemperaturänderung $\Delta VLT_{Netz}$ und/oder die Speichermanagementvorgabe $SPMV$ unter Anwendung einer Fuzzy-Logik ermittelt wird.

Dies kann einfacher Weise erfindungsgemäß auch durch Anwendung einer Fuzzy-Logik erfolgen, in der als jeweilige Eingangswerte ein Speicherladezustand $SLZ_j$ für jeden zentralen oder dezentralen Wärmespeicher in der Siedlung (oder ein ggf. gewichteter Mittelwert $SLZ$ aller Speicherladzustände $SLZ_j$), der aktuelle Strompreis $SP$, Belastungsgrad des Wärmeerzeugers $Phi_{KWK}$, der Siedlungsversorgungszustand $SVZ$ (oder die in alleiniger Abhängigkeit von dem Siedlungsversorgungszustand $SVZ$ ermittelte Vorlauftemperaturänderung $\Delta VLT_{Netz,SVZ}$) entsprechend der für die Zielgröße jeweils gewünschten Abhängigkeiten mit Zugehörigkeitsfunktionen bewertet werden. Bei der Ermittlung der Netz-Vorlauftemperaturänderung $\Delta VLT_{Netz}$ kann ferner zusätzlich noch die Speichermanagementvorgabe $SPMV$ mit berücksichtigt werden. Beispiele hierfür ergeben sich auch aus der Beschreibung der besonders bevorzugten Ausführungsbeispiele, ohne dass die im Zusammenhang beschriebenen Vorgehensweisen erfindungsgemäß jeweils unbedingt miteinander kombiniert werden müssen.

Die durch die Zugehörigkeitsfunktionen bewerteten Eingangswerte werden dann in einer Fuzzy-Inferenz zu dem gewünschten Zielwert kombiniert.

Bei der Ermittlung der Netz-Vorlauftemperaturänderung $\Delta VLT_{Netz}$ und/oder der Speichermanagementvorgabe $SPMV$ können erfindungsgemäß ferner die Daten einer Wetterprognose, insbesondere Temperaturprognosedaten zur Abschätzung einer Änderung des Wärmebedarfs aufgrund externer Witterungseinflüsse, und/oder Gebäudekenndaten, insbesondere Gebäudeträgheitsdaten für eine Berücksichtigung der Erwärmung/Auskühlung des Gebäudes, berücksichtigt werden.

Ist für den nächsten Tag, vor allem im Sommer, in der Wetterprognose Sonnenschein gemeldet, so ist um die Mittagszeit mit einem hohen Stromangebot aus Photovoltaikanlagen zu rechnen, mit entsprechender Auswirkung auf den Strompreis. Es kann somit sinnvoll sein, die Speicher zu laden, um am Folgetag (z.B. mit dem prognostizierten geringeren Sonnenschein) während der Mittagszeit den Wärmebedarf aus dem Speicher zu decken und die KWK-Anlage während dieser Zeit nicht oder nur mit geringer Leistung zu betrieben. Analoges gilt für Windprognosen im Hinblick auf die Stromproduktion durch Winkkraftanlagen.

In einer weiteren Stufe kann unter Berücksichtigung der Temperaturprognose und der Gebäudekenndaten eine Abschätzung des zu erwartenden Wärmebedarfs des oder der Gebäude erfolgen. Dies Wärmebedarfsprognose kann mit der Stromangebotsprognose korreliert werden, um eine sinnvolle Speichermanagementvorgabe abzuleiten. Im Beispiel liefern die Wärmebedarfsprognosen einen geringen Wärmebedarf in zwei Tagen, die Windprognose hohe Windgeschwindigkeiten in zwei Tagen und geringe Windgeschwindigkeiten in drei Tagen. Folglich sollten die Speicher nicht ganz geladen werden, so dass der geringe Wärmebedarf in zwei Tagen aus dem Speicher gedeckt werden kann, in drei Tagen aber wieder Strom und Wärme produziert werden können.

Die Berücksichtigung dieser oder erfindungsgemäß auch anderer heizkreisexternen Kenngrößen bzw. Daten, die direkt und in signifikanter Abhängigkeit den Wärmebedarf im Gebäude mit bestimmen, führt zu einer deutlich präziseren Steuerung oder Regelung der Wärmeversorgung in der Siedlung und trägt so dazu bei, unter Gewährleistung des gewünschten Komforts eine ökonomisch und ökologisch optimierte Ansteuerung des zentralen Wärmeversorgers zu erreichen.

Entsprechend dem erfindungsgemäßen, vorstehend beschriebenen Steuer- bzw. Regelverfahren bezieht sich die Erfindung auch auf eine Vorrichtung zur Steuerung bzw. Regelung der Wärmeversorgung von Wärmeverbrauchern in Gebäuden einer Siedlung mittels eines zentralen Wärmeversorgers mit den Merkmalen des Anspruchs 8. Die erfindungsgemäß vorgeschlagene Vorrichtung umfasst insbesondere einen mit Kommunikationsschnittstellen zum Empfangen und Senden von Daten ausgestatteten Steuerrechner, wobei der Steuerrechner dazu eingerichtet ist, aus bspw. über eine der Kommunikationsschnittstellen empfangenen oder aus anderen empfangenden Daten bspw. zur Heizkostenerfassung oder Einzelraumtemperaturregelung ermittelten Gebäudeversorgungszuständen, welche jeweils den Wärmebedarf von Wärmeverbrauchern in einem Gebäude der Siedlung anzeigen, einen Siedlungsversorgungszustand zu ermitteln, welcher den Wärmebedarf der gesamten Siedlung anzeigt. Weiterhin ist der Steuerrechner entsprechend dem zuvor beschriebenen Verfahren erfindungsgemäß dazu eingerichtet, ein Steuersignal, insbesondere eine Netz-Vorlauftemperaturänderung $\Delta VLT_{Netz}$ für die Netz-Vorlauftemperatur $VLT_{Netz}$ in dem Wärmeverteilungsnetz, in Abhängigkeit von diesem Siedlungsversorgungszustand zu erzeugen und insbesondere als Stellgröße oder Stellgrößenkorrektur bspw. über eine der Kommunikationsschnittstellen an den zentralen Wärmeversorger auszugeben.

Vorzugsweise ist der Steuerrechner mittels geeigneter Programmcodemittel, auf die sich die Erfindung auch bezieht, zur Durchführung des vorbeschriebenen Verfahrens, insbesondere auch nach einem oder mehreren der Ansprüche 1 bis 7, oder Teilen hiervon eingerichtet. Dazu ist insbesondere vorgesehen, dass der Steuerrechner mit den Kommunikationsschnittstellen dazu eingerichtet ist, Daten von peripheren Geräten oder Einrichtungen zu empfangen und an diese auszugeben. Die Programmcodemittel können auf einem Datenträger oder einem zentral zugänglichen Server, bspw. im Internet, gespeichert sein.

Gemäß einer besonders bevorzugten Ausbildungsform der erfindungsgemäß vorgeschlagenen Vorrichtung kann vorgesehen sein, den Steuerrechner dazu einzurichten , eine Art Regeldifferenz bildende Abweichung $\Delta SVZ$ des Siedlungsversorgungszustand $SVZ$ zu einem Sollwert des Siedlungsversorgungszustands $XS_{SVZ}$ zu ermitteln und als Steuersignal bzw. Stellgröße dienende $\Delta VLT_{Netz}$ in Abhängigkeit von dieser Abweichung $\Delta SVZ$ zu ermitteln.

Als weitere Eingangsgrößen für die Ermittlung der Stellgröße Netz-Vorlauftemperaturänderung $\Delta VLT_{Netz}$ zur Steuerung bzw. Regelung der Wärmeversorgung der Wärmeverbraucher in den Gebäuden 4 der Siedlung 5 mittels des zentralen Wärmeversorgers 2 können dem Steuerrechner als Verkaufserlös für den durch den Wärmeerzeuger, insbesondere ein Kraftwerk zur Strom-Wärme-Kopplung, der aktuelle Strompreis $SP$, der Belastungsgrad $Phi_{KWK}$ des zentralen Wärmeversorgers, Daten einer Wetterprognose, wie insbesondere Temperaturprognosedaten, und/oder Gebäudekenndaten, wie insbesondere Gebäudeträgheitsdaten für eine Berücksichtigung der Erwärmung/Auskühlung des Gebäudes, Sonnenscheindauer- und / oder Windgeschwindigkeitsprognosen, berücksichtigt werden. Dies kann bspw. durch eine geeignete Implementierung von Fuzzy-Regelung zur Abbildung des vorbeschriebenen Verfahrens erfolgen, die der Fachmann unter Berücksichtigung des erfindungsgemäß vorgeschlagenen Regel- bzw. Steuerkonzepts ohne weiteres vornehmen kann.

Erfindungsgemäß kann der Steuerrechner eine zentrale Recheneinheit sein. Es ist jedoch auch möglich, die für den Steuerrechner beschriebenen Funktionen in einem Netzwerk aus miteinander in Kommunikationsverbindung stehenden separaten Recheneinheiten verteilt auszuführen, wobei die Recheneinheiten in einem Gehäuse zusammengefasst oder über mehrere separate Gehäuse verteilt angeordnet sein können. Eine Zusammenfassung bestimmter Funktionen kann je nach Anforderung erfolgen. In diesem Text wird der Begriff "Steuerrechner" als gemeinsame Beschreibung für jede dieser Lösungen bezeichnet. Teilweise werden einzelne Funktionen auch als bestimmten Modulen zugeordnet beschrieben, die dann Teil des Steuerrechners sind.

Erfindungsgemäß sind an den Steuerrechner Steuerungen von zentralen und/oder dezentralen Wärmespeichern, insbesondere über die oder einen Teil der Kommunikationsschnittstellen, anschließbar und der Steuerrechner dazu eingerichtet, Speicherladezustände $SLZ_j$ von den (jeweils angeschlossenen) Steuerungen der (einzelnen) zentralen und/oder dezentralen Wärmespeicher über die Kommunikationsschnittstelle zu erhalten und ggf. jeweils eine Speichermanagementvorgabe $SPMV_j$ über die Kommunikationsschnittstelle an die angeschlossenen Steuerungen der einzelnen zentralen oder dezentralen Wärmespeicher zu versenden. Es kann jeweils eine Kommunikationsschnittstelle für einen Wärmespeicher vorgesehen sein. Vorzugsweise ist jedoch vorgesehen, dass die Wärmespeicher über einen Kommunikationsbus mit dem Steuerrechner kommunizieren. In diesem Fall ist eine Kommunikationsschnittstelle an dem Steuerrechner grundsätzlich ausreichend.

Hierdurch ist es erfindungsgemäß besonders effektiv möglich, die in dem Wärmeverteilungsnetz der Siedlung vorhandenen Wärmespeicher zur strombedarfsgeführten Nutzung eines Kraft-Wärme-gekoppelten Kraftwerks zu nutzen und dann möglichst viel Strom zu erzeugen, wenn dieser insbesondere vor Ort benötigt wird und sich ein hoher Strompreis bei der Einspeisung des Stroms in das Stromleitungsnetz erzielen lässt.

Erfindungsgemäß kann die Speichermanagementvorgabe $SPMV$, $SPMV_j$ auch bei der Ermittlung des Steuersignals an den zentralen Wärmeversorger berücksichtigt werden.

Weitere Vorteile, Merkmale und Anwendungsmöglichkeiten ergeben sich aus der nachfolgenden Beschreibung von Ausführungsbeispielen und der Zeichnung. Dabei bilden alle beschrieben und/oder bildlich dargestellten Merkmale für sich oder in beliebiger Kombination den Gegenstand der vorstehenden Erfindung, auch unabhängig von ihrer Zusammenfassung in den Ansprüchen oder deren Rückbezügen.

Es zeigen:

Fig. 1 schematisch einen Gesamtüberblick über eine bevorzugte Ausführungsform der erfindungsgemäß vorgeschlagenen Verfahren und Vorrichtung zur Steuerung bzw. Regelung der Wärmeversorgung von Wärmeverbrauchern in Gebäuden einer Siedlung;

Fig. 2      eine logische Zusammenstellung der Ein- und Ausgangsgrößen der Steuerung gemäß Fig. 1;

Fig. 3      eine logische Zusammenstellung der Ein- und Ausgangsgrößen für die Berechnung des Siedlungsversorgungszustands gemäß Fig. 1 gemäß einer ersten Ausführungsvariante;

Fig. 4      eine mögliche Zugehörigkeitsfunktion der Fuzzy-Logik gemäß Fig. 3 für den Gebäudeunterversorgungszustand;

Fig. 5      eine mögliche Zugehörigkeitsfunktion der Fuzzy-Logik gemäß Fig. 3 für den Gebäudeüberversorgungszustand;

Fig. 6      eine mögliche Zugehörigkeitsfunktion der Fuzzy-Logik gemäß Fig. 3 für den Siedlungsversorgungszustand;

Fig. 7      eine tabellarische Übersicht der Regelbasis der Fuzzy-Logik gemäß Fig. 3;

Fig. 8      eine logische Zusammenstellung der Ein- und Ausgangsgrößen für die Berechnung des Siedlungsversorgungszustands gemäß Fig. 1 gemäß einer zweiten Ausführungsvariante umfassend eine zusätzliche Eingangsgröße Netzübertemperatur;

Fig. 9      schematisch einen möglichen funktionalen Zusammenhang zwischen der als Netzübertemperatur definierten Differenz der NetzVorlauftemperatur und der Heizkreis-Vorlauftemperatur in einem Gebäude und einem Gewichtungskoeffizient für die Berechnung der Eingangsgröße Netzübertemperatur gemäß Fig. 8 aus den Netzübertemperaturen der einzelnen Gebäude;

Fig. 10      eine mögliche Zugehörigkeitsfunktion der Fuzzy-Logik gemäß Fig. 8 für die Netzübertemperatur;

Fig. 11      eine tabellarische Übersicht der Regelbasis der Fuzzy-Logik gemäß Fig. 8;

Fig. 12      eine logische Zusammenstellung der Ein- und Ausgangsgrößen für die Berechnung der Netz-Vorlauftemperaturänderung $\Delta VLT_{Netz}$ als Steuersignal für den Wärmeversorger gemäß Fig. 1;

Fig. 13      eine mögliche Zugehörigkeitsfunktion der Fuzzy-Logik gemäß Fig. 12 für das Netz-Vorlauftemperatur-Änderungspotential $\Delta VLT_{Netz,SVZ}$ ();

Fig. 14      eine mögliche Zugehörigkeitsfunktion der Fuzzy-Logik gemäß Fig. 12 für die Netz-Vorlauftemperatur $VLT_{Netz}$;

Fig. 15      eine logische Zusammenstellung der Ein- und Ausgangsgrößen für die Berechnung der Speichermanagementvorgabe $SPMV$ gemäß Fig. 1;

Fig. 16      eine mögliche Zugehörigkeitsfunktion der Fuzzy-Logik gemäß Fig. 15 für den Speicherladezustand SLZ;

Fig. 17      eine mögliche Zugehörigkeitsfunktion der Fuzzy-Logik gemäß Fig. 15 für den Strompreis $SP$;

Fig. 18      eine mögliche Zugehörigkeitsfunktion der Fuzzy-Logik gemäß Fig. 15 für die Speichermanagementvorgabe $SPMV$;

Fig. 19      eine tabellarische Übersicht der Regelbasis der Fuzzy-Logik gemäß Fig. 15 gemäß einer ersten Ausführungsvariante;

Fig. 20      eine mögliche Zugehörigkeitsfunktion der Fuzzy-Logik gemäß Fig. 15 für die Speichermanagementvorgabe Belastungsgrad PHI_KWK des Wärmeversorgers;

Fig. 21 a,b      eine tabellarische Übersicht der Regelbasis der Fuzzy-Logik gemäß Fig. 15 gemäß einer zweiten Ausführungsvariante;

Fig. 22        eine tabellarische Übersicht der Regelbasis der Fuzzy-Logik gemäß Fig. 12;

Fig. 23        eine mögliche Zugehörigkeitsfunktion der Fuzzy-Logik gemäß Fig. 12 für die Fuzzy-Interferenz;

Fig. 24        eine beispielhafte Defuzzifizerung für ein konkretes Beispiel unter Anwendung der Zugehörigkeitsfunktion nach Fig. 23; und

Fig. 25        in einer Übersicht die regelungstechnische Darstellung der vorgeschlagenen Vorrichtung bzw. des vorgeschlagenen Verfahrens gemäß Fig. 1

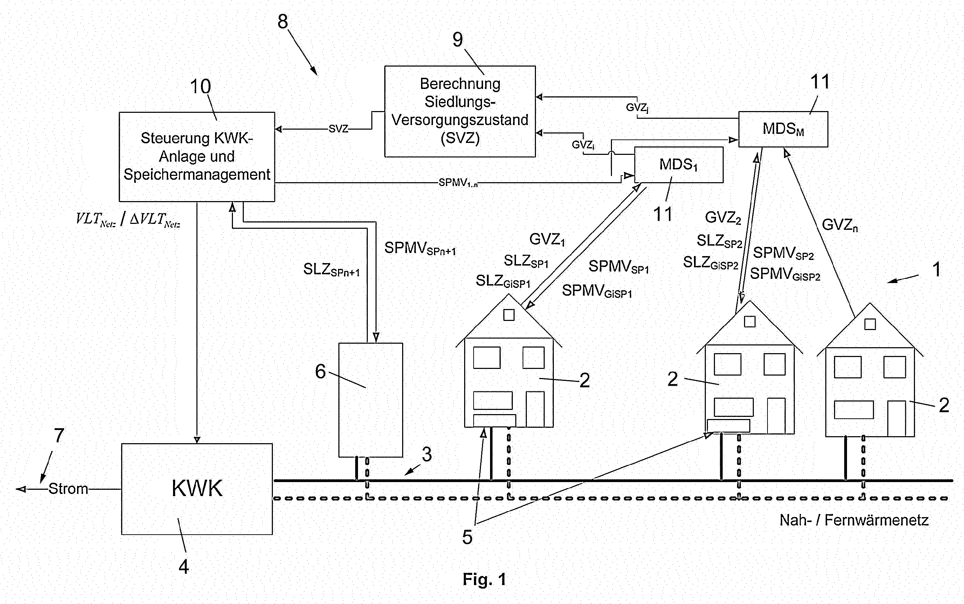

Fig. 1 zeigt im Überblick als bevorzugte Ausführungsform der Erfindung eine Siedlung 1 mit mehreren Gebäuden 2, die über ein Wärmeverteilungsnetz 3 mit einem zentralen Wärmeversorger 4 verbunden sind. Der Wärmeversorger 4 erhitzt einen Wärmeträger auf eine Netzvorlauftemperatur $VLT_{Netz}$, mit der der Wärmeträger an die einzelnen Gebäude 2 verteilt wird. Die - nicht dargestellten - Wärmeverbraucher in den Gebäuden 2 sind insbesondere je Gebäude 2 bspw. jeweils eine zentrale Gebäudeheizungsanlage, an welche in einem (Gebäude-) Heizkreis Heizkörper- oder Heizflächen zur Beheizung einzelner Räume der Gebäude 2 angeschlossen sind. In den mit Wärme zu versorgenden Gebäuden 2 können optional dezentrale Wärmespeicher 5, bspw. in Form eines Trink- oder Warmwasserspeichers, vorgesehen sein. In der Siedlung 1 können ferner ein oder mehrere zentrale Wärmespeicher 6 vorhanden sein, wie beispielsweise Erdwärmespeicher. Sowohl die dezentralen Wärmespeicher 5 als auch die zentralen Wärmespeicher 6 sind über das Wärmeverteilnetz 3 an den zentralen Wärmeversorger 4 angeschlossen, wobei das Wärmeverteilnetz mit einem Vorlauf (in der Darstellung durchgezogene Linie) und einen Rücklauf (in der Darstellung gestrichelte Linie) ausgestattet ist.
Der zentrale Wärmeversorger 4 ist eine zentrale Wärmeerzeugungsanlage, die in einer bevorzugten Ausgestaltung der Erfindung eine sogenannte Kraft-Wärme-Kopplungs-Anlage (KWK-Anlage) ist, die Strom und Wärme gleichzeitig erzeugt. Der erzeugte Strom wird in das öffentliche Netz 7 (Stromnetz) eingespeist. Die dabei erzeugte Wärme wird als erwärmter Wärmeträger über das Wärmeverteilungsnetz 3 insbesondere an die Gebäude 4 insbesondere zu Heizzwecken abgeführt.
Zur Steuerung bzw. Regelung des Wärmeversorgers 4 ist ein Steuerrechner 8 vorgesehen, der zur Durchführung des erfindungsgemäßen Steuer- bzw. Regelverfahrens eingerichtet ist. In Fig. 1 sind dazu beispielhaft verschiedene Recheneinheiten 9, 10 dargestellt, die erfindungsgemäß durch eine zentrale Recheneinheit oder durch mehrere, vorzugsweise miteinander vernetzte separate Recheneinheiten gebildet werden können. Die Darstellung in Fig. 1 stellt eine sinnvolle logische Verknüpfung der verschiedenen, nachfolgend noch ausführlich beschriebenen Regel- und Steuerfunktionen dar. Diese Darstellung soll nicht bedeuten, dass die Hardware des Steuerrechners entsprechend aufgebaut sein muss oder soll.
Konzeptionell wird in einer Recheneinheit 9 des Steuerrechners 8 zur Berechnung eines Siedlungsversorgungszustands $SVZ$ aus einzelnen Gebäudeversorgungszuständen $GVZ_i$ der zu versorgenden Gebäude 2 der Siedlungsversorgungszustand $SVZ$ gebildet. Ein Gebäudeversorgungszustand $GVZ_i$ gibt den Wärmebedarf eines Gebäudes 2 in der Siedlung 1 an. Dieser setzt vom Grundsatz her die in dem Gebäude angebotene Wärmeleistung in Relation zu der durch die Gebäude tatsächlich abgenommenen Wärmeleistung, wie eingangs bereits ausführlich mit Hinweisen auf die konkrete Ausgestaltung für verschiedene Lösungen beschrieben wurde. Hierauf wird zur Vermeidung von Wiederholungen Bezug genommen. Diese Gebäudeversorgungszustände $GVZ_i$ können in einfacher Weise im Zusammenhang mit der Heizungskostenerfassung bzw. Heizkostenverteilung für ein Gebäude 2 oder zusammengefasst für mehrere Gebäude 2 der Siedlung 1 gebildet und bspw. durch Datensammler 11 bestimmt und über eine Kommunikationsschnittstelle an den Steuerrechner 8 bzw. die Recheneinheit 9 übermittelt werden.
Die Recheneinheit 10 des Steuerrechners 8 steuert durch Vorgabe einer Netz-Vorlauftemperatur $VLT_{Netz}$ in dem Wärmeverteilnetz bzw. durch Vorgabe einer Netz-Vorlauftemperaturänderung $\Delta VLT_{Netz}$ für eine Änderung der aktuellen Netz-Vorlauftemperatur $VLT_{Netz}$ eine Variation der Leistung der Wärmeversorgung, d.h. des zentralen Wärmeversorgers 4, in Abhängigkeit des Siedlungsversorgungszustands $SVZ$, welcher analog zu den Gebäudeversorgungszuständen $GVZ_i$, aus denen er abgeleitet ist, den Wärmebedarf der gesamten Siedlung anzeigt.
Besonders bei kombinierter Wärme- und Stromerzeugung mittels KWK-Anlage als Wärmeversorger 4 kommt einem Speicherbelade- und Speicherentladekonzept für die zentralen und/oder dezentralen Wärmespeicher 5, 6 eine hohe Bedeutung zu, da hiermit der Betrieb der KWK-Anlage weiter optimiert werden kann. Dieses Speicherbelade- und Speicherentladekonzept ist gemäß Fig. 1 als Speichermanagementvorgabe $SPMV$ mit in die Recheneinheit 10 zur Steuerung des zentralen Wärmeversorgers 4 integriert. Dies ist vorteilhaft, weil die Speichermanagementvorgabe $SPMV$ auch Auswirkungen auf die Vorlauftemperatur $VLT_{Netz}$ bzw. die Netz-Vorlauftemperaturänderung $\Delta VLT_{Netz}$ haben kann.
Konkret können die Gebäudeversorgungszustände $GVZ_i$ vorzugsweise mit Methoden der Fuzzy-Logik aus den einzelnen Versorgungszuständen der Heizkörper des zugeordneten Gebäudes 2 gebildet werden. Der Siedlungsversorgungszustand *SVZ* wird vorzugsweise mit Methoden der Fuzzy-Logik aus den einzelnen Gebäudeversorgungszuständen $GVZ_i$ gebildet, was nachfolgend anhand einer besonders bevorzugten Ausführungsform noch ausführlich beschrieben wird. Das Grundprinzip, das für den Siedlungsversorgungszustand *SVZ* beschrieben wird, kann entsprechend auch auf den Gebäudeversorgungszustand $GVZ_i$ angewandt werden.

Der Siedlungsversorgungszustand *SVZ* kennzeichnet den aktuellen Wärmeversorgungszustand bzw. -grad eines Siedlungsgebietes bzw. einer Siedlung 1, d.h. er definiert die aktuelle Versorgungslage der Siedlung 1 mit Wärme als den aktuellen Bedarf bezogen auf das aktuelle Wärmeangebot. Vorzugsweise kann der Siedlungsversorgungszustand *SVZ* als dimensionslose Größe mit einem vordefinierten Wertebereich definiert sein. Nachfolgend sei angenommen, dass Werte des Siedlungsversorgungszustands *SVZ* im Bereich von -100 bis 0 für eine Unterversorgung mit Wärme und Werte im Bereich von größer 0 bis 100 für Überversorgung mit Wärme stehen. Werte um Null herum stehen für eine ausgewogene Bilanz zwischen Wärmeangebot und Wärmebedarf.

Das vorgeschlagene Steuer- bzw. Regelkonzept basiert nun darauf, dass eine Absenkung der Netz-Vorlauftemperatur $VLT_{Netz}$ in dem Wärmeverteilungsnetz 3 der Siedlung 1 möglich ist, wenn der Siedlungsversorgungszustand *SVZ* dauerhaft größer als ein parametrierbarer Sollwert des Siedlungsversorgungszustands $XS_{SVZ}$ ist. Im Extremfall kann sogar eine Abschaltung der Wärmeleistung des Wärmeverteilungsnetzes 3, d.h. also des zentralen Wärmeversorgers 4, erfolgen. Die Höhe einer Netz-Vorlauftemperaturänderung $\Delta VLT_{Netz}$ bzw. die Abschaltung des zentralen Wärmeversorgers 4 kann vorzugsweise in (zusätzlicher) Abhängigkeit des Speicherladezustandes der vorhandenen Wärmespeicher 5, 6 erfolgen.

Im Falle einer KWK-Anlage, d.h. eines zentralen Wärmeversorgers 4, der gleichzeitig Strom und Wärme erzeugt, wobei der Strom in das öffentliche Netz 7 und die Wärme in das Wärmeverteilungsnetz 3 der Siedlung eingespeist wird, steht als weiterer Parameter für die Steuerung des zentralen Wärmeversorgers 4 der aktuelle Strombedarf zur Verfügung, der besonders effektiv in dem für eingespeisten Strom erzielten Strompreis *SP* zum Ausdruck kommt. So kann gerade auch unter Berücksichtigung des bzw. auf Basis des Strompreises *SP* mit Hilfe des nachfolgend dargestellten Verfahrens entschieden werden, ob der zentrale Wärmeversorger 4 die Siedlung 1 mit Wärme versorgt und ggf. die Wärmespeicher 5, 6 belädt, oder ob der Wärmebedarf durch Entladung der Wärmespeicher 5, 6 ggfls. in Kombination mit dem eingeschalteten Wärmeversorger 4 (KWK-Aggregat) erfolgt.

So kann es bei hohem Erlös (Strompreis *SP*) für den erzeugten Strom, d.h. einem bspw. lokalen Strombedarf, trotz eines hohen, eher eine Wärmeüberversorgung der Siedlung 1 anzeigenden Siedlungsversorgungszustands *SVZ* ökologisch und ökonomisch gleichwohl sinnvoll sein, weiterhin Wärme und Strom zu erzeugen und in diesem Fall die in der Siedlung 1 vorhandenen und an das Wärmeverteilungsnetz 3 angeschlossenen Wärmespeicher 5, 6 zu laden. Umgekehrt ist es bei niedrigen Strompreisen *SP*,. einem bspw lokalen Stromüberangebot, sinnvoll, zunächst die Wärmespeicher 5, 6 zur Deckung eines möglichen Wärmebedarfs in der Siedlung, also im Falle eines niedrigen Siedlungsversorgungszustands *SVZ,* zu entladen und die Wärme- und Stromerzeugung zu drosseln oder vorübergehend sogar ganz einzustellen.

Unterschreitet der *SVZ* den parametrierbaren Sollwert $XS_{SVZ}$ dauerhaft, muss die Wärmeleistung in dem Wärmeverteilungsnetz 3 angehoben bzw. der zentrale Wärmeversorger 4 eingeschaltet werden.

Optional können zur Erweiterung des vorstehend beschriebenen Grundkonzepts in die Optimierung bzw. Steuerung der Wärmeversorgung auch Prognosedaten für das Wetter, z.B. für die Außentemperatur des nächsten oder der nächsten Tage, oder Angaben zu der Gebäudeträgheit (insbesondere zur Auskühlzeit des Gebäudes) mit einbezogen werden. Auch Prognosedaten für den Strompreis *SP,* basierend auf Wetterprognosen *WP* und typischen Verbrauchsverläufen, bspw. zu einer erwarteten Stromerzeugung durch erneuerbare Energien (Solarkraftwerke, Windkraftwerke), können in das Verfahren mit einbezogen werden.

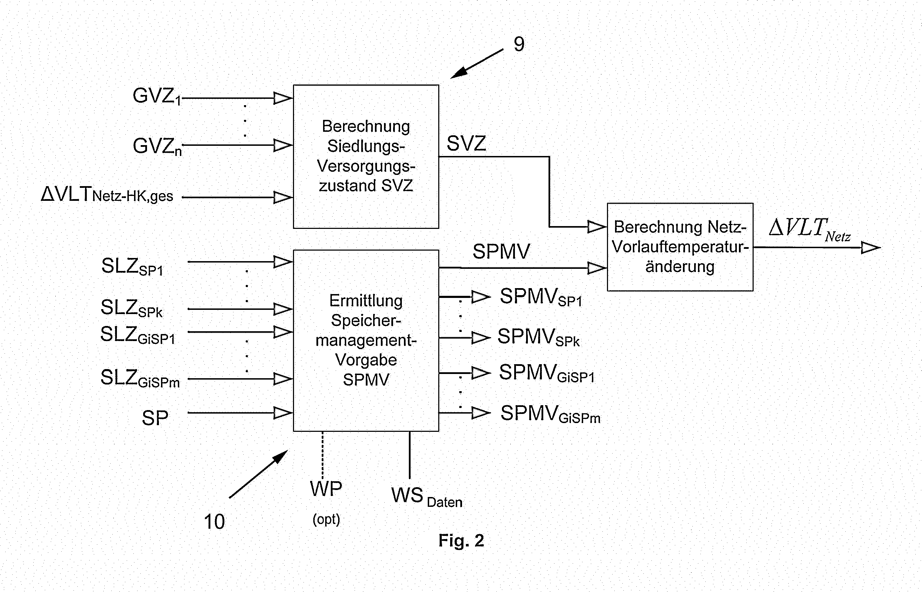

Die in den Recheneinheiten 9, 10 ablaufenden Verfahrensschritte gemäß dem Grundkonzept sind in Fig. 2 etwas detaillierter dargestellt.

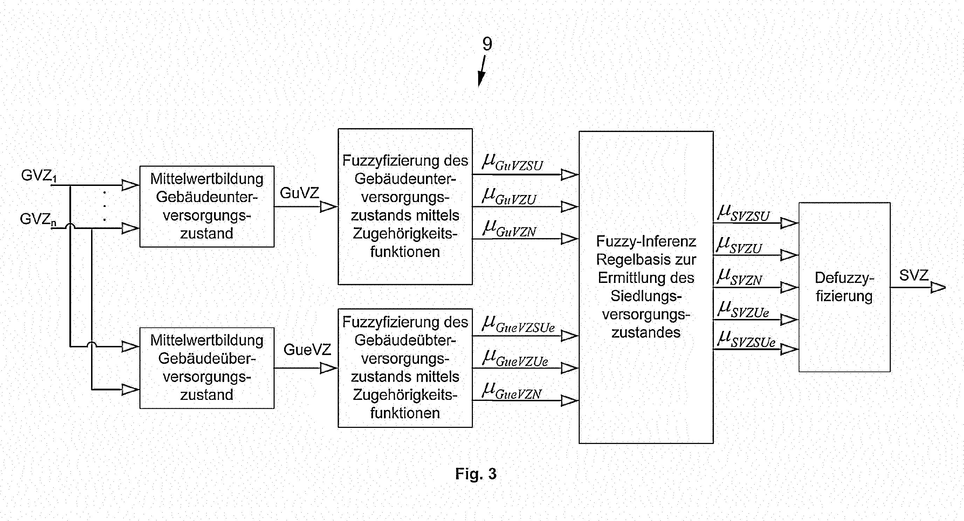

Aus den Gebäudeversorgungszuständen $GVZ_i$ für insgesamt n Gebäude 2 der Siedlung 1 wird in der Recheneinheit 9 der Siedlungsversorgungszustand *SVZ* ermittelt. Dies wird nachfolgend mit Bezug auf die Fig. 3 bis 11 für unterschiedliche Ausführungsformen unter Verwendung der Fuzzy-Logik im Detail beschrieben. Bei der Ermittlung des Siedlungsversorgungszustands kann optional die Differenz zwischen der Netz-Vorlauftemperatur $VLT_{Netz}$ in dem Wärmeverteilungsnetz 3 und Gebäude-Vorlauftemperaturen $VLT_{HK}$ in den Gebäuden 2 berücksichtigt werden, d.h. die Differenz der Netz-Vorlauftemperatur $VLT_{Netz}$ des Wärmeträgers, auf die der Wärmeträger durch den zentralen Wärmeversorger 4 erhitzt bzw. mit der der Wärmeträger im Wärmeverteilungsnetz verteilt wird, und der Vorlauftemperatur in einem Heizkreis $VLT_{HK}$ eines Gebäudes 2 der Siedlung, mit berücksichtigt werden. Diese Differenz wird auch als Netzübertemperatur $\Delta VLT_{Netz-HK}$ bezeichnet. Diese Differenz kann auch als Mittelwert über alle Gebäude $\Delta VLT_{Netz-HK,ges}$ berücksichtigt werden.

Neben dem Siedlungsversorgungszustand *SVZ* ist gemäß der beschriebenen bevorzugten Ausführungsform auch vorgesehen, eine Speichermanagementvorgabe *SPMV* zur Steuerung bzw. Regelung der Wärmeversorgung in der Siedlung zu verwenden, die insbesondere gemeinsam mit dem Siedlungsversorgungszustand als Eingangsgröße zur Ermittlung der Netz-Vorlauftemperatur $VLT_{Netz}$ bzw. der Änderung der Netz-Vorlauftemperaturänderung $\Delta VLT_{Netz}$

in der Recheneinheit 10 herangezogen werden kann.

Als Eingangsgrößen für die Ermittlung der Speichermanagementvorgabe *SPMV* können erfindungsgemäß insbesondere Speicherladezustände $SLZ_j$ der Wärmespeicher 5, 6 herangezogen werden, die bspw. von dezentral vorgesehenen Steuerungen der jeweiligen Wärmespeicher 5, 6 über eine Kommunikationsschnittstelle an den Steuerrechner 8 bzw. die jeweils zuständigen Recheneinheiten 9, 10 des Steuerrechners 8 gemeldet werden. Hierbei kann es sich beispielsweise um eine dimensionslose Größe, bspw. eine Prozentangabe der in dem jeweiligen Wärmespeicher 5, 6 aktuell gespeicherten und ggf. abrufbaren Wärme bezogen auf die maximale Speicherkapazität des Wärmespeichers 5, 6, handeln. In der Darstellung gemäß Fig. 2 wird zwischen Speicherladezuständen $SLZ_{SPj}$, j=1,...,k der zentralen Wärmespeicher 6 und Speicherladezuständen $SLZ_{GiSPj}$, j=1,...m der dezentralen (gebäudeinternen) Wärmespeicher 5 unterschieden. Dies ist erfindungsgemäß besonders bevorzugt, weil die Wärme von gebäudeinternen dezentralen Wärmespeichern 5 und von zentralen Wärmespeichern 6 ggf. unterschiedlich in das Wärmeverteilungsnetz 3 abrufbar ist. Hierdurch ist eine differenzierte Bewertung der Speicherladezustände möglich, ohne dass die Erfindung allerdings auf diese Differenzierung beschränkt ist.

Eine bei KWK-Anlagen aus den erläuterten Gründen besonders bevorzugte weitere Eingangsgröße für die Ermittlung der Speichermanagementvorgabe *SPMV* ist der Strompreis *SP*, der als aktueller Wert von einer geeigneten Informationsquelle, bspw. einem Internetanbieter, über eine Kommunikationsschnittstelle eingegeben werden kann, um die technische Größe "aktueller Strombedarf" zu berücksichtigen und die KWK-Anlage auch unter ökonomischen Gesichtspunkten optimiert zu betreiben, d.h. möglichst dann viel Strom zu produzieren und in das öffentliche Stromnetz 7 einzuspeisen, wenn sich hierfür ein hoher Ertrag (Preis) erzielen lässt.

Eine weitere, optionale Eingangsgröße können Wetterprognosedaten *WP* sein, die sowohl eine Abschätzung des erforderlichen Wärmebedarfs als auch des erforderlichen Strombedarfs in dem durch die Wetterprognose erfassten Zeitraum ermöglicht.

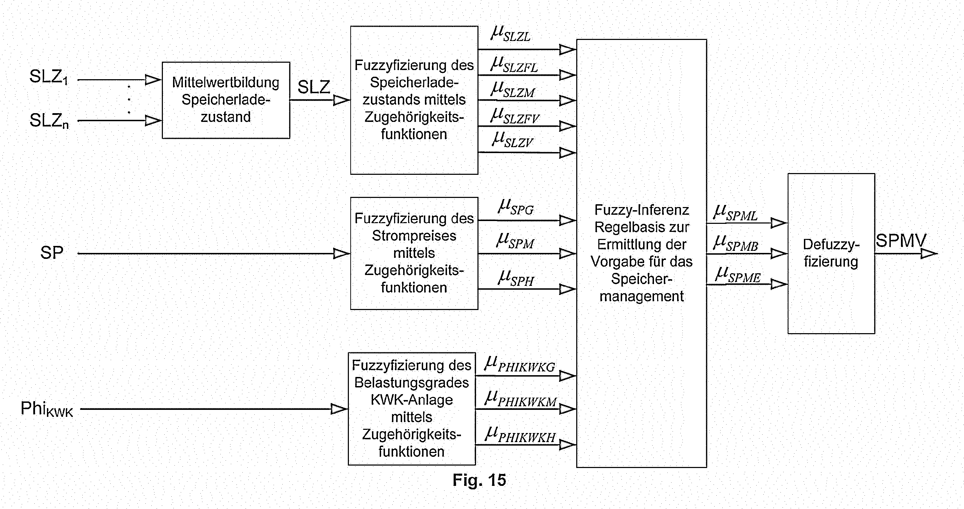

Ferner kann bei der Ermittlung der Speichermanagementvorgabe *SPMV* auf Nenndaten $WS_{Daten}$ der einzelnen Wärmespeicher 5, 6, bspw. eine maximale und eine minimale Speichertemperatur, die Speicherkapazität oder dgl., zugegriffen werden, welche die weitere Strategie für das Wärmespeichermanagement durch präzisere Einschätzung der zur Verfügung stehenden Kapazitäten beeinflussen können. Nicht dargestellt in Fig. 2 ist als weitere mögliche Eingangsgröße der aktuelle Belastungsgrad $Phi_{KWK}$ des Wärmeversorgers 4, der in dem Steuerrechner 8 bspw. aus Betriebsdaten abgeleitet werden und die maximale Wärme- und/oder Stromkapazität des Wärmeversorgers 4 berücksichtigen kann (vgl. hierzu auch Fig. 15).

Eine konkrete Möglichkeit zur Ermittlung der Speichermanagementvorgabe *SPMV* wird mit Bezug zu den Fig. 15 bis 21 später noch beschrieben.

Neben der Ermittlung der Speichermanagementvorgabe *SPMV,* die wie beschrieben zur Steuerung der Wärmeversorgung mit verwendet wird, kann erfindungsgemäß vorgesehen sein, dass auch individuelle (lokale) Speichermanagementvorgaben $SPMV_j$ ermittelt und an die jeweiligen Steuerungen der einzelnen dezentralen und zentralen Wärmespeicher 5, 6 ausgegeben werden, damit die Wärmespeicher 5, 6 auch dem Steuer- bzw. Regelkonzept der erfindungsgemä-ßen Steuerung optimal folgen. Diese an die einzelnen Wärmespeicher 5, 6 adressierten Speichermanagementvorgaben sind in Fig. 2 als $SPMV_{SPj}$ für die zentralen Wärmespeicher 6 und als $SPMV_{GiSPj}$ für die dezentralen Wärmespeicher 6, bezeichnet, mit j=1,...,k für die zentralen und j=1,...,m für die dezentralen Wärmespeicher 5, 6.

Es ist jedoch grundsätzlich auch denkbar, dass die Steuerungen der einzelnen Wärmespeicher 5, 6 jeweils autark, bspw. auf Grundlage der aktuellen Speicherdaten und der Netz-Vorlauftemperatur $VLT_{Netz}$, das lokale Speichermanagement der Wärmespeicher 5, 6 übernehmen, ohne dass dieses lokale Speichermanagement zentral durch den Steuerrechner 8 vorgegeben bzw. festgelegt wird. Auch Mischformen sind denkbar, bspw. je nach Kommunikationsfähigkeit der lokalen Steuerung der einzelnen Wärmespeicher. Erfindungsgemäß bevorzugt ist eine Ausführungsform, in welcher der Steuerrechner 8 dazu eingerichtet ist, die lokalen Speichermanagementvorgaben $SPMV_j$ zu ermitteln und über eine Kommunikationsschnittstelle auszusenden. Dann bleibt es lokal jeder Steuerung eines Wärmespeichers 5, 6 vorbehalten, ob es diese Steuerinformationen nutzt oder nicht.

Mit Bezug auf Fig. 3 wird nachfolgend die Ermittlung des Siedlungsversorgungszustands *SVZ* für eine besonders bevorzugte Ausführungsform beschrieben.

Die zur Ermittlung des Siedlungsversorgungszustands *SVZ* eingerichtete Recheneinheit 9 des Steuerrechners 8 erhält über die Kommunikationsschnittstelle von einem oder mehreren Datensammlern 11 die in den Datensammlern 11 ermittelten Gebäudeversorgungszustände $GVZ_i$ der entsprechend ausgerüsteten und von einem Strang des Fern-/Nahwärmeversorgungsnetzes 3 versorgten Gebäude 2. Grundsätzlich ist die Erfindung unabhängig davon, wie in den Wärmebedarf bzw. den Grad der Wärmeversorgung anzeigender Gebäudeversorgungszustand $GVZ_i$ ermittelt wird. Besonders bevorzugte Möglichkeiten wurden eingangs beschrieben. Auf diese Beschreibung wird hier verwiesen. Der Siedlungsversorgungszustand *SVZ* wird dann unter Verwendung der Gebäudeversorgungszustände $GVZ_i$ ermittelt.

Es versteht sich, dass die Erfindung es bevorzugt, wenn für jedes Gebäude 2 ein Gebäudeversorgungszustand $GVZ_i$ ermittelt wird, weil so die Genauigkeit des Siedlungsversorgungszustands verbessert ist. Anwenden lässt sich die Erfindung aber auch in einem Fall, in dem mindestens ein Gebäude 2 einen Gebäudeversorgungszustand $GVZ_i$ mitteilt,

der dann als repräsentativ für sämtliche Gebäude 2 der Siedlung 1 angesehen werden kann.

Die Bildung des Siedlungsversorgungszustands $SVZ$ kann im einfachsten Fall (in Fig. 3 nicht dargestellten Fall) per Minimum-Auswahl erfolgen. Dabei bestimmt der niedrigste Gebäudeversorgungszustand $GVZ_i$ (also das Gebäude 2 mit der schlechtesten Wärmeversorgung) den Siedlungsversorgungszustand $SVZ$. Dies kann auch angewendet werden, wenn in der Siedlung 1 nur für ein Gebäude 2 ein Siedlungsversorgungszustand ermittelt wird.

In einem detaillierteren Verfahren zur Ermittlung des Siedlungsversorgungszustands $SVZ$ erfolgt, wie in Fig. 3 veranschaulicht, eine gewichtete Mittelwertbildung, vorzugsweise mittels Fuzzy-Logik, der einzelnen Gebäudeversorgungszustände $GVZ_i$, wobei die Gebäudeversorgungszustände $GVZ_i$, die eine Unterversorgung der Gebäude 2 mit Wärme ausweisen, stärker gewichtet werden, als die Gebäudeversorgungszustände $GVZ_i$, die eine Überversorgung der Gebäudes 2 ausweisen. Dies kann analog zu dem Verfahren zur Berechnung eines Gebäudeversorgungszustands $GVZ_i$ aus den Versorgungszuständen der Heizkörper innerhalb eines Gebäudes erfolgen. Entsprechend kann der Fachmann das nachfolgend für den Siedlungsversorgungszustand $SVZ$ detailliert beschriebene Verfahren auch für die Ermittlung eines Gebäudeversorgungszustands $GVZ_i$ anwenden.

In einem ersten Verfahrensschritt werden aus den einzelnen Gebäudeversorgungszuständen $GVZ_i$, nachfolgend auch vereinfacht als $GVZ$ (ohne den Index) bezeichnet, jeweils der Mittelwert der Gebäudeüberversorgungszustände GueVZ und der Gebäudeunterversorgungszustände GuVZ wie folgt berechnet:

Der Mittelwert der Gebäudeüberversorgungszustände GueVZ berechnet sich als arithmetischer Mittelwert aller Gebäudeversorgungszustände $GVZ \geq 0$:

$$GueVZ = \frac{1}{n_{GVZ \geq 0}} \sum GVZ_{GVZ \geq 0}$$

Entsprechend wird der Mittelwert der Gebäudeunterversorgungszustände GuVZ als arithmetischer Mittelwert aller Gebäudeversorgungszustände $GVZ < 0$ berechnet:

$$GuVZ = \frac{1}{n_{GVZ < 0}} \sum GVZ_{GVZ < 0}$$

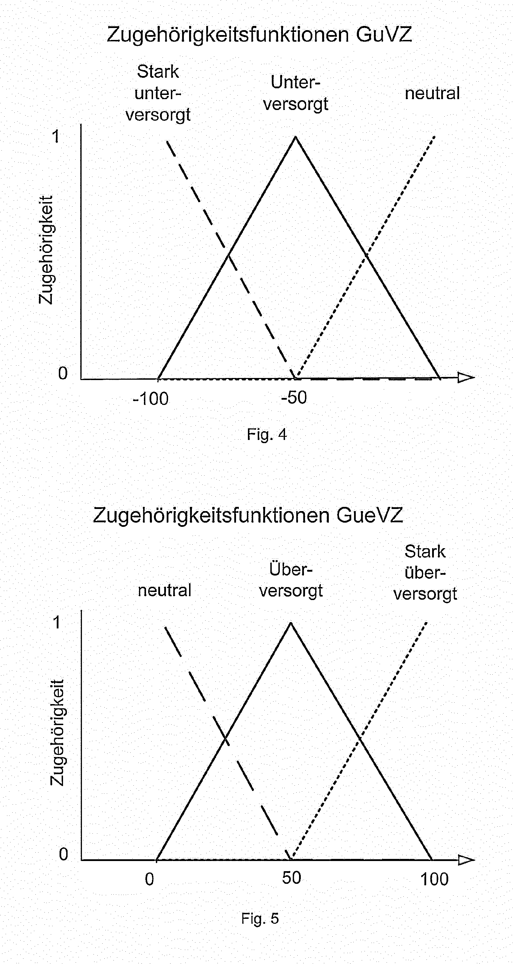

Anschließend erfolgt in Anwendung einer Fuzzy-Logik eine Fuzzyfizierung dieser Mittelwerte des Gebäudeüberversorgungszustands GueVZ und des Gebäudeunterversorgungszustands GuVZ anhand der in Fig. 4 und Fig. 5 dargestellten Zugehörigkeitsfunktionen. Die Zugehörigkeitsfunktionen stellen in der Fuzzy-Logik Zustandsbeschreibungen dar, die bestimmte Werte einer Variable, hier der zuvor ermittelten Mittelwerte, mit einem gewissen Zugehörigkeitswert einer bestimmten Zugehörigkeitsfunktion belegen. Die Zuweisung der Werte kann bspw. anhand des in den Fig. 4 und 5 dargestellten Funktionsverlaufs erfolgen.

Dies wird nachfolgend beispielhaft für die Zugehörigkeitsfunktionen "stark unter versorgt", "unterversorgt" und "neutral", die auf den Mittelwert der Gebäudeversorgungsunterzustände GuVZ angewendet werden, anhand von Fig. 4 erläutert. Dieses Grundprinzip gilt für alle erfindungsgemäß vorgeschlagenen Zuordnungen von Variablen zu konkreten Werten von Zugehörigkeitsfunktionen bei der Fuzzyfizierung, so dass im Folgenden dann nur noch auf die entsprechenden Figuren verwiesen wird.

Die Zugehörigkeitsfunktion "stark unterversorgt" ist in Fig. 4 gestrichelt, die Zugehörigkeitsfunktion "unterversorgt" durchgezogen und die Zugehörigkeitsfunktion "neutral" gepunktet dargestellt. Die entsprechenden Werte der Zugehörigkeitsfunktionen, hier Werte zwischen 0 und 1, können auf der y-Achse abhängig von der Variablen (x-Achse) zugewiesen werden. In Fig. 3 sind die Zugehörigkeitsfunktionswerte als $\mu_{GuVZSU}$ (stark unterversorgt), $\mu_{GuVZU}$ (unterversorgt) und $\mu_{GuVZN}$ (neutral) dargestellt. Diese Zugehörigkeitsfunktionswerte werden für einen bestimmten Wert der Variablen, hier den Mittelwert der Gebäudeunterversorgungszustände GuVZ, aus Fig. 4 abgelesen.

Dies wird nachfolgend für zwei Beispiele erläutert. Für einen Wert von -50 für den Gebäudeunterversorgungszustand GuVZ ergeben sich die folgenden drei Zugehörigkeitsfunktionswerte:

$\mu_{GuVZSU} = 0$

$\mu_{GuVZU} = 1$

$\mu_{GuVZN} = 0$

Für einen Wert von -75 für den Gebäudeunterversorgungszustand GuVZ ergeben sich die folgenden drei

Zugehörigkeitsfunktionswerte:

$\mu_{GuVZSU} = 0,5$

$\mu_{GuVZU} = 0,5$

$\mu_{GuVZN} = 0$

Diese Werte der Zugehörigkeitsfunktionen werden nachfolgend an eine Fuzzy-Inferenz weitergegeben, die die Regelbasis für die Ermittlung des Siedlungsversorgungszustands bildet.

Entsprechendes gilt für die Werte der Zughörigkeitsfunktionen für den Gebäudeüberversorgungszustand GueVZ, die aus Fig. 5 abgeleitet werden können.

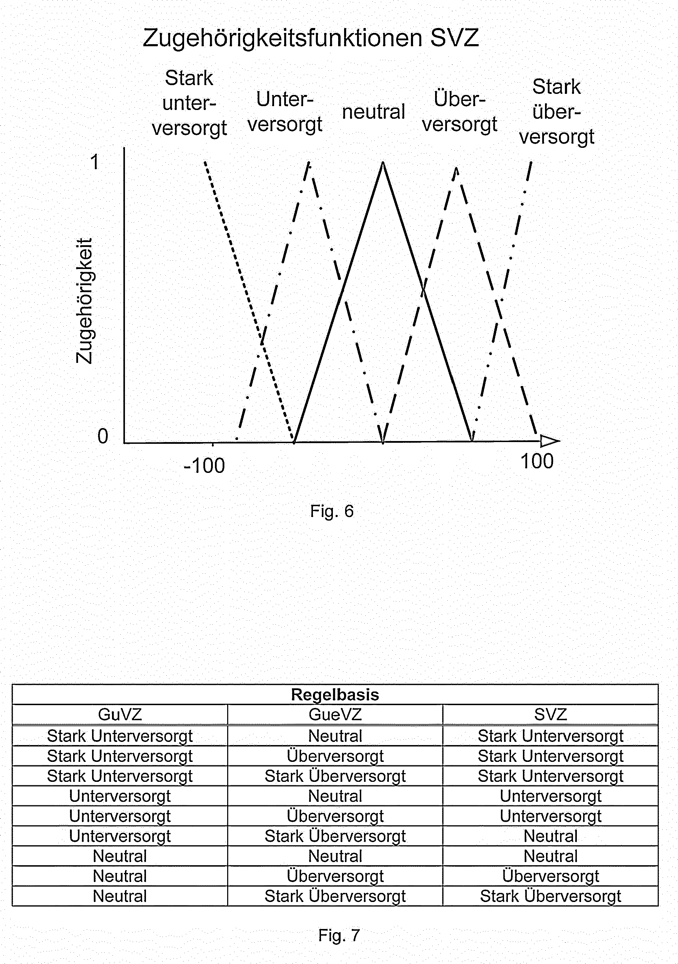

Die Regelbasis der Fuzzy-Inferenz weist ausgehend von den Werten der Zugehörigkeitsfunktionen der Gebäudeüber- und Gebäudeunterversorgungszustände den Zugehörigkeitsfunktionen der zu ermittelnden Zielgröße (hier: Siedlungsversorgungszustand *SYZ*) bestimmte Werte zu. Ein Beispiel für die Zugehörigkeitsfunktionen des Siedlungsversorgungszustands *SVZ* ist in Fig. 6 dargestellt. Entsprechend erzeugt die Fuzzy-Inferenz die fünf Werte $\mu_{SVZSU}$ (für die Zugehörigkeitsfunktion "stark unterversorgt"), $\mu_{SVZU}$ (für die Zugehörigkeitsfunktion "unterversorgt"), $\mu_{SVZN}$ (für die Zugehörigkeitsfunktion "neutral"), $\mu_{SVZUe}$ (für die Zugehörigkeitsfunktion "überversorgt"), $\mu_{SVZSUe}$ (für die Zugehörigkeitsfunktion "stark überversorgt").

Eine beispielhafte Regelbasis ist (mit textlich beschriebenen Werten der Zugehörigkeitsfunktionen) in Fig. 7 dargestellt. Die Eingangsgrößen bilden die Werte der Zugehörigkeitsfunktionen für die Mittelwerte des Gebäudeunterversorgungszustands GuVZ und des Gebäudeüberversorgungszustands GueVZ. Für bestimmte Wertepaarkombinationen lassen sich hier Werte der Zugehörigkeitsfunktionen für den Siedlungsversorgungszustand ablesen (rechte Spalte der Tabelle gemäß Fig. 7). Programmtechnisch kann dies dadurch erfolgen, dass bestimmten Wertebereichen der einzelnen Zugehörigkeitsfunktionen der Eingangsgrößen (hier: GuVZ und GueVZ) bestimmte Werte der Zugehörigkeitsfunktionen der Ausgangsgröße (hier: *SVZ*) zugewiesen werden. Diese Wertebereiche sind in Fig. 7 zum besseren Verständnis textlich beschrieben.

Nach Anwendung der Regelbasis in der Fuzzy-Inferenz stehen für die Zielgröße also die Werte der ihr zugewiesenen Zugehörigkeitsfunktionen fest. Dies sind für den hier beschriebenen Siedlungsversorgungszustand *SVZ* die in Fig. 6 dargestellten Zugehörigkeitsfunktionen. Diese Funktionswerte werden einer Defuzzyfizierung zugeführt, die aus diesen Funktionswerten mittels grundsätzlich bekannter Verfahren, bspw. einer Schwerpunktmethode zur Gewichtung der einzelnen Funktionswerte einen genauen (scharf abgegrenzten) Wert für den Siedlungsversorgungszustand *SVZ* (respektive allgemeiner: für die Zielgröße) ermittelt. Dies muss an dieser Stelle nicht genauer beschrieben werden und liegt im Griffbereich des Fachmanns.

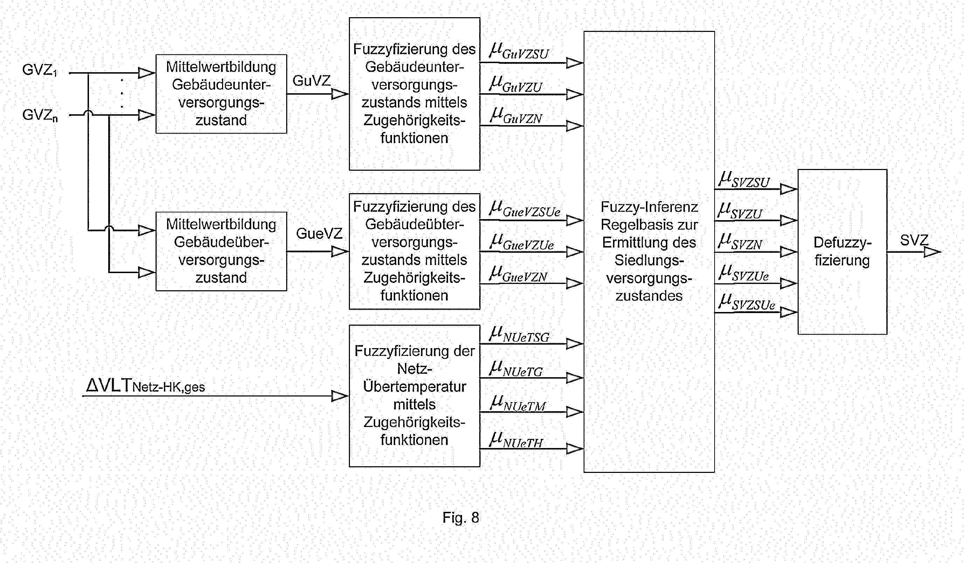

Fig. 8 zeigt eine weitere Ausführungsform zur Ermittlung des Siedlungsversorgungszustands *SVZ* unter Anwendung einer Fuzzy-Logik, bei der zusätzlich zu den Mittelwerten der Gebäudeüberversorgungszustände GueVZ und der Gebäudeunterversorgungszustände GuVZ als sog. Netzübertemperatur zusätzlich die Differenz des Netz-Vorlauftemperatur $VLT_{Netz}$ in dem Wärmeverteilungsnetz 3 und die Vorlauftemperatur in einem oder mehreren Gebäuden 2 berücksichtigt wird. Die Vorlauftemperatur in dem Gebäude ist insbesondere die Vorlauftemperatur $VLT_{HK}$ in dem Heizkreis der Heizungsanlage des Gebäudes 2 und kann dem Steuerrechner 8 bspw. zusammen mit dem Gebäudeversorgungszustand *GVZ* übermittelt werden. Auch die Vorlauftemperatur $VLT_{HK}$ in dem Gebäude 2 ist ein Maß für die Wärmeversorgung in dem Wärmeverteilungsnetz 3 der Siedlung 1. Ggf. wäre es sogar möglich, diese Größe als alleinige Bestimmung eines Siedlungsversorgungszustands *SVZ* heranzuziehen. Die zuvor beschriebene Lösung zur Bildung des Siedlungsversorgungszustands unter Verwendung der Gebäudeversorgungszustände *GVZ* ist die bevorzugte Lösung, weil der Wärmebedarf bzw. Wärmeversorgungsgrad der Siedlung so wesentlich genauer festgestellt werden kann.

Die Netzübertemperatur $\Delta VLT_{Netz-HK}$ ist also definiert als

$$\Delta VLT_{Netz-HK} = VLT_{Netz} - VLT_{HK}$$

und kann in die Bewertung bzw. Bestimmung des Siedlungsversorgungszustands mit eingehen, indem auch diese als Variable mit eigenen Zugehörigkeitsfunktionen in die Anwendung der Fuzzy-Logik eingeht. Wie Fig. 8 zeigt, hat dies weder Einfluss auf die Zugehörigkeitsfunktionen für die Gebäudeüberversorgungszustände GueVZ und die Gebäudeunterversorgungszustände GuVZ noch auf die Zugehörigkeitsfunktionen für den Siedlungsversorgungszustand *SVZ,* die unverändert bleiben können. Es müssen lediglich neue Zugehörigkeitsfunktionen für die Netzübertemperatur $\Delta VLT_{Netz-HK}$ definiert und diese in einer entsprechend erweiterten Regelbasis der Fuzzy-Inferenz mit berücksichtigt werden. Dies zeigt, dass es durch die erfindungsgemäße Anwendung der Fuzzy-Logik nicht nur möglich ist, intuitiv ein bestimmtes Verhalten zu definieren, sondern dass auch einfach weitere Variablen mit in den Steuer- bzw. Regelprozess mit eingebunden werden können.

So kann bspw. ein niedriger Gebäudeversorgungszustand *GVZ* (Unterversorgung), der bei einer geringen Netzübertemperatur $\Delta VLT_{Netz-HK}$ zustande kommt, ein höheres Gewicht erhalten, als ein niedriger Gebäudeversorgungszustand *GVZ,* der bei hohen Netzübertemperatur $\Delta VLT_{Netz-HK}$ zustande kommt, da in letzterem Fall noch ein höheres Potenzial zur Anhebung der Vorlauftemperatur im Gebäude vorhanden ist und eine Anhebung der Netzvorlauftemperatur mit größerer Wahrscheinlichkeit nicht erforderlich ist.

Da die Vorlauftemperatur des Heizkreises $VLT_{HK}$ in den einzelnen Gebäuden 2 von den individuellen Einstellungen abhängt, kann es grundsätzlich sinnvoll sein, auch hier als Eingangsgröße in die Fuzzy-Logik einen Mittelwert zu bilden. Dabei kann eine inhaltlich sinnvolle Gewichtung angewendet werden.

Aus allen Netzübertemperaturen $\Delta VLT_{Netz-HK,i}$ der einzelnen Gebäude i wird über eine gewichtete Mittelwertbildung die gemittelte Netzübertemperatur $\Delta VLT_{Netz-HK,ges}$ ermittelt:

$$\Delta VLT_{Netz-HK,ges} = \frac{\sum\limits_{i=1}^{n} a_i\left(\Delta VLT_{Netz-HK,i}\right) \cdot \Delta VLT_{Netz-HK,i}}{\sum\limits_{i=1}^{n} a_i\left(\Delta VLT_{Netz-HK,i}\right)}$$

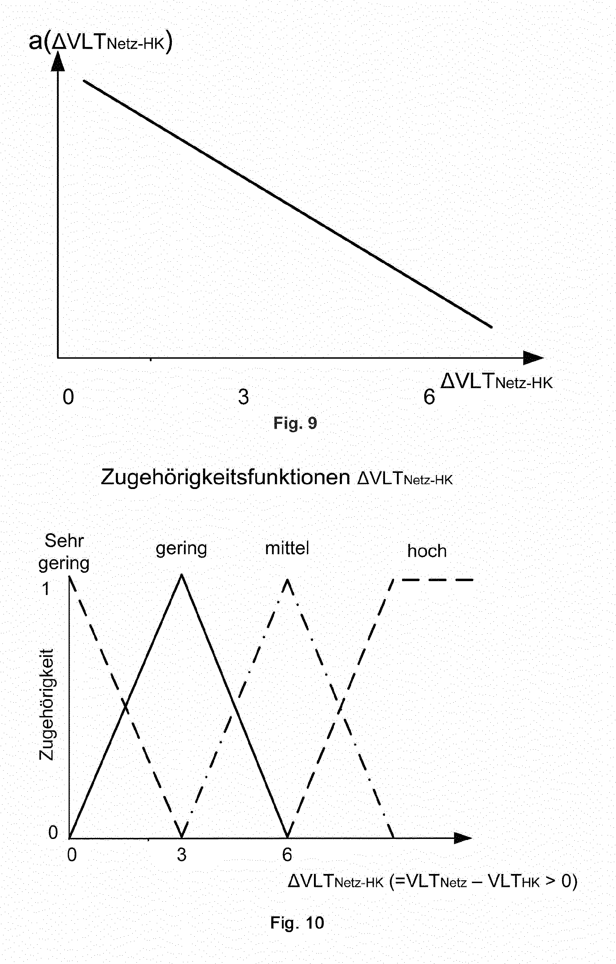

Die Gewichtungskoeffizienten $a_i$ hängen dabei von der jeweiligen Netzübertemperatur $\Delta VLT_{Netz-HK,i}$ im jeweiligen Gebäude i ab, wobei ein möglicher funktionaler Zusammenhang in Fig. 9 dargestellt ist. Durch den umgekehrt proportionalen Zusammenhang werden kleine Übertemperaturen $\Delta VLT_{Netz-HK,i}$ stärker gewichtet, bei denen eine Anhebung der Heizkreisvorlauftemperatur $VLT_{HK}$ aufgrund des nur geringfügig höheren Wärmeangebots des Wärmeträgers in dem Wärmeverteilungsnetz 3 kaum noch oder nur in geringem Umfang möglich ist. Die Steigung der Geraden sollte dabei parametrierbar sein, um eine Anpassung vornehmen zu können. Andere, auch nichtlineare Zusammenhänge, sind ebenfalls möglich.

Die nach der Mittelwertbildung für die Netzübertemperatur $\Delta VLT_{Netz-HK}$ erfolgende Fuzzyfizierung der dritten Eingangsgröße Netzübertemperatur $\Delta VLT_{Netz-HK}$ kann anlog zu dem zuvor bereits ausführlich beschriebenen Vorgehen anhand der in Fig. 10 dargestellten Zugehörigkeitsfunktionen erfolgen. Die entsprechenden Werte $\mu$ der Zugehörigkeitsfunktionen werden, wie in Fig. 8 dargestellt, in die Fuzzy-Inferenz mit eingegeben und durch eine erweiterte Regelbasis der Fuzzy-Inferenz mit verarbeitet.

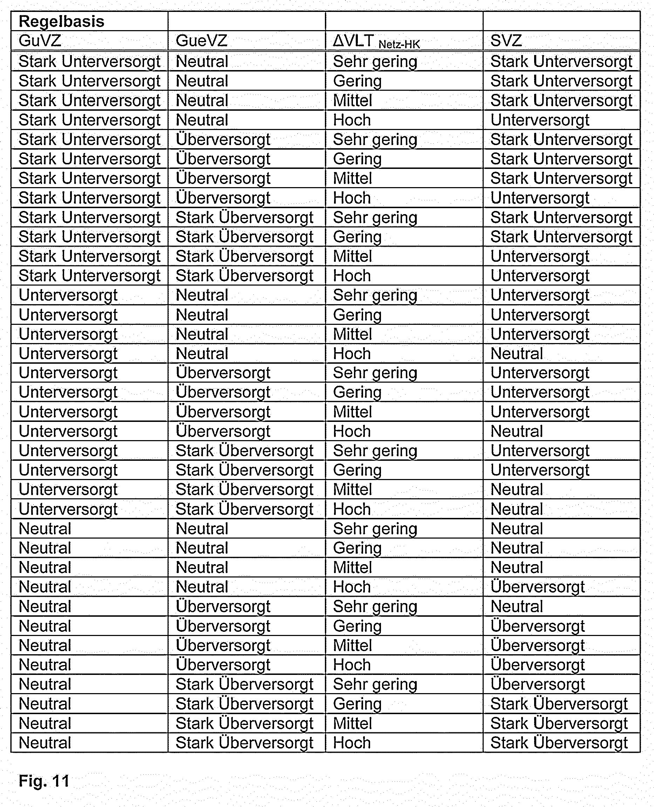

Eine beispielhafte Regelbasis für die Fuzzy-Inferenz ist in der Tabelle gemäß Fig. 11 dargestellt, in der als weitere Eingangswerte nun die der mittleren Netzübertemperatur $\Delta VLT_{Netz-HK,ges}$ (oder kurz auch nur als Netzübertemperatur $\Delta VLT_{Netz-HK}$ bezeichnet) zugewiesenen Zugehörigkeitsfunktionen mit den sich dadurch ergebenden, gegenüber Fig. 7 erweiterten Kombinationsmöglichkeiten berücksichtigt werden, um die Werte der Zugehörigkeitswerte der Ausgangsgröße Siedlungsversorgungszustand zu ermitteln.

Damit liegt nun gemäß Fig. 2 eine Eingangsgröße vor, die in dem dargestellten Ausführungsbeispiel zusammen mit der Speichermanagementvorgabe *SPMV* erfindungsgemäß verwendet wird, um eine Stellgröße (hier eine Änderung der Netz-Vorlauftemperatur $\Delta VLT_{Netz}$) zur Steuerung der Wärmeversorgung von Wärmeverbrauchern in Gebäuden 2 einer Siedlung 1 auszugeben, die insbesondere den zentralen Wärmeversorger steuert. Grundsätzlich könnte erfindungsgemäß eine Änderung der Netz-Vorlauftemperatur $\Delta VLT_{Netz}$ als Stellgröße aber auch allein auf Basis des Siedlungsversorgungszustands ermittelt werden.

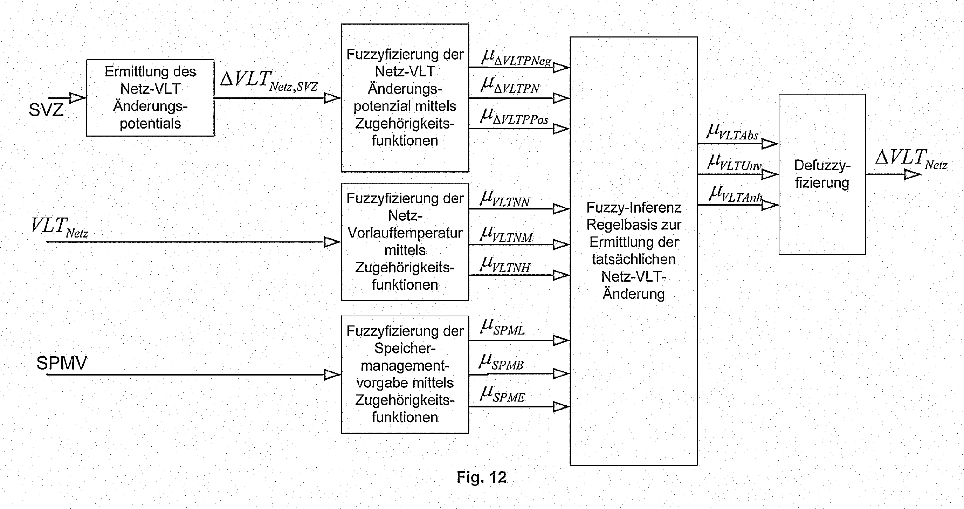

Dies lässt sich Fig. 12 entnehmen, die für ein besonders bevorzugtes Ausführungsbeispiel schematisch die Ermittlung der Änderung der Netz-Vorlauftemperatur $\Delta VLT_{Netz}$ unter Verwendung des Siedlungsversorgungszustands *SVZ,* der Speichermanagementvorgabe *SPMV* und der aktuellen Netz-Vorlauftemperatur $VLT_{Netz}$ als weitere optionale Eingangsgröße zeigt. Diese Ermittlung wird nachfolgend im Detail beschrieben.

Die bspw. wie zuvor beschrieben ermittelte Eingangsgröße Siedlungsversorgungszustand *SVZ* wird in einem ersten Verfahrensschritt dazu verwendet, zu ermitteln, wie die aktuelle Netz-Vorlauftemperatur $VLT_{Netz}$ geändert werden könnte oder sollte, wenn nur allein die aktuelle Wärmeversorgung der Siedlung 1, definiert durch den Siedlungsversorgungszustand *SVZ,* berücksichtigt würde. Diese Größe wird auch als Netz-Vorlauftemperatur-Änderungspotential $\Delta VLT_{Netz,SVZ}$ auf Basis des Siedlungsversorgungszustands *SVZ* bezeichnet und könnte, sofern keine weiteren Eingangsgrößen berücksichtigt werden, unmittelbar als Stellgröße für den zentralen Wärmeversorger 4 verwendet werden.

Die Ermittlung des Netz-Vorlauftemperatur-Änderungspotentials $\Delta VLT_{Netz,SVZ}$ wird nachfolgend als erster Verfahrensschritt aus Fig. 12 beschrieben. Diese Größe gibt Aufschluss über eine mögliche Absenkung der Netz-Vorlauftemperatur $VLT_{Netz}$, d. h. über das Absenkpotential der Netz-Vorlauftemperatur $VLT_{Netz}$.

Hierzu wird der zuvor ermittelte Siedlungsversorgungszustand *SVZ* mit einem ggf. einstellbar vorgegebenen Sollwert $XS_{SVZ}$ für den Siedlungsversorgungszustand $SVZ$ verglichen. Ist die Differenz bzw. Regelabweichung

$$\Delta SVZ = XS_{SVZ} - SVZ$$

größer als ein parametrierbarer Hysteresewert +DXS, so besteht eine Unterversorgung und die Netztemperatur ist anzuheben. Ist dagegen die Differenz bzw. Regelabweichung $\Delta SVZ$ kleiner als ein parametrierbarer Hysteresewert -DXS, so besteht eine Überversorgung und die Netz-Vorlauftemperatur $VLT_{Netz}$ kann abgesenkt werden. Die Anhebung bzw. Absenkung der Netz-Vorlauftemperatur $VLT_{Netz}$ kann beispielsweise proportional zu $\Delta SVZ$ sein:

$$\Delta VLT_{Netz} = k \cdot \Delta SVZ \quad f\ddot{u}r \; |\Delta SVZ| > DXS, sonst \; 0$$

Weiterhin kann gemäß einer eigenständigen erfindungsgemäßen Option der vorliegenden Erfindung die bei einer bestimmten Außentemperatur typischerweise erforderliche Netz-Vorlauftemperaturänderung $\Delta VLT_{Netz}$ bzw. deren Änderungspotential $\Delta VLT_{Netz,SVZ}$ erlernt und als Basiswert für die Vorgabe der Netz-Vorlauftemperatur $VLT_{Netz}$ verwendet werden. Anhand des aktuellen Siedlungsversorgungszustands $SVZ$ kann dann eine Korrektur dieses Basiswertes erfolgen.

Das aufgrund der Abweichung des Siedlungsversorgungszustands $SVZ$ von einem vorgegebenen Sollwert $XS_{SVZ}$ ermittelte Änderungspotential $\Delta VLT_{Netz,SVZ}$ für die Netz-Vorlauftemperatur $VLT_{Netz}$ kann in der einfachsten Ausführungsform daher unmittelbar als Änderung der Netz-Vorlauftemperatur $\Delta VLT_{Netz}$, und damit als Stellgröße, ermittelt werden.

Gemäß einer bevorzugten Ausführungsform, und insbesondere wenn der zentrale Wärmeversorger 4 eine KWK-Anlage ist, sollte zusätzlich eine Speichermanagementvorgabe $SPMV$ als weitere Eingangsgröße für die Ermittlung der Stellgröße Netz-Vorlauftemperaturänderung $\Delta VLT_{Netz}$ mit herangezogen werden. Ferner können weitere Eingangsgrößen, wie bspw. die aktuelle Netz-Vorlauftemperatur, berücksichtigt werden. Wie aus Fig. 12 ersichtlich, können diese verschiedenen Eingangsgrößen dann als erfindungsgemäß bevorzugte Ausführungsform durch Anwendung einer Fuzzy-Logik in die gewünschte Ausgangsgröße Netz-Vorlauftemperaturänderung $\Delta VLT_{Netz}$ umgewandelt werden. Das Grundprinzip in der Anwendung der Fuzzy-Logik wurde im Zusammenhang mit der Ermittlung des Siedlungsversorgungszustands bereits ausführlich beschrieben und soll an dieser Stelle nicht wiederholt werden.

Technisch sinnvolle und bevorzugte Zugehörigkeitsfunktionen werden jedoch zusammen mit jeder der beschriebenen Eingangsgrößen erläutert.

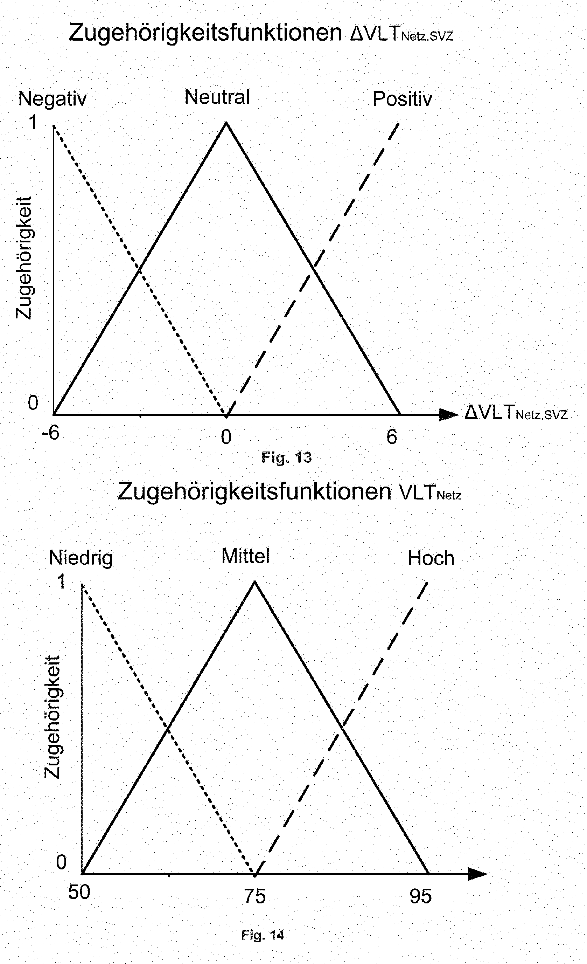

Die Zugehörigkeitsfunktionen für das aus dem Siedlungsversorgungszustand $SVZ$ ermittelte Netz-Vorlauftemperatur-Änderungspotenzial $\Delta VLT_{Netz,SVZ}$ sind in Fig. 13, die Zugehörigkeitsfunktionen für die Netz-Vorlauftemperatur $VLT_{Netz}$ in Fig. 14 dargestellt. Die entsprechenden Werte $\mu$ werden wie bereits beschrieben zugwiesen und der Fuzzy-Inferenz zugeführt.

Eine weitere Eingangsgröße gemäß Fig. 12 stellt die Speichermanagementvorgabe $SPMV$ dar. Bevor die in der Fuzzyfizierung gemäß Fig. 12 verwendeten Zugehörigkeitsfunktionen betrachtet werden, wird nachfolgend die Ermittlung der Speichermanagementvorgabe in der Recheneinheit 10 des Steuerrechners 8 erläutert.

Ziel der Speichermanagementvorgabe $SPMV$ ist eine unter ökonomischen und ökologischen Gesichtspunkten optimierte Steuerung des zentralen Wärmeversorgers 4, insbesondere wenn dieser als KWK-Anlage gleichzeitig in das öffentliche Stromnetz 7 eingespeisten Strom und in das Wärmeverteilungsnetz 3 eingespeiste Wärme (insbesondere in Form eines erhitzten Wärmeträgers) erzeugt. Dazu wird in Abhängigkeit von Kenngrößen, wie dem aktuellen Speicherladezustand SLZ der Wärmespeicher 5, 6, dem Belastungsgrad $Phi_{KWK}$ des Wärmeversorgers 4, sowie wirtschaftlichen Daten, wie z.B. dem aktuell zu erzielenden Verkaufserlös bzw. Strompreis $SP$ für den erzeugten Strom, welcher technisch gesehen ein Maß für den aktuellen insbesondere lokalen Strombedarf ist, der Betrieb der KWK-Anlage als Gesamtsystem in der Siedlung 1 optimiert.

Die Optimierungsstrategie ist darauf ausgerichtet, bei hohen Strompreisen $SP$ viel Strom, und damit auch Wärme, zu produzieren. Kann die produzierte Wärme in diesem Fall nicht abgenommen werden, so sollen in der Siedlung 1 vorhandene Wärmespeicher 5, 6 beladen werden. Dies können zentrale Wärmespeicher 6, z.B. ein wärmeisolierter Tank oder ein unterirdischer Wärmespeicher (z.B. Erdwärmespeicher), oder dezentrale Wärmespeicher 5 innerhalb der Gebäude 2 (z.B. Trinkwarmwasserspeicher oder auch gebäudeintegrierte Wärmespeicher wie thermoaktive Bauteile) sein. Bei niedrigen oder sogar negativen Strompreisen, d.h. einem Überangebot an Strom, soll wenig Strom, und damit auch wenig Wärme, erzeugt werden. In diesem Fall ist die Netz-Vorlauftemperatur $VLT_{Netz}$ des Wärmeverteilungsnetzes so weit wie möglich abzusenken und die Wärmespeicher 5, 6 sind zu entladen, d.h. Wärme aus den Wärmespeichern 5, 6 in das Wärmeverteilungsnetz 3 abzugeben. Die Wärmespeicher 5, 6 können dazu die Wärme in das Nah-/Fernwärmenetz einspeisen oder, bei dezentralen Wärmespeichern 5 innerhalb der Gebäude 2 oder gebäudeintegrierten Wärmespeichern 5, Wärme in den als Verteilnetz innerhalb des Gebäudes 2 dienenden Heizkreis einspeisen bzw. direkt am Ort des Wärmebedarfs in Räumen abgeben. Die Höhe der tatsächlichen Absenkung der Netz-Vorlauftemperatur $\Delta VLT_{Netz}$ im Sinne einer Netz-Vorlauftemperaturänderung ergibt sich dabei aus den genannten Eingangsgröße sowie ggf. weiterer Kenngrößen, die beispielhaft im Folgenden mit beschrieben werden. Im Extremfall eines sehr niedrigen oder sogar negativen Strompreises $SP$, d.h. einem Überangebot an Strom, kann erfindungsgemäß auch Strom aus dem Stromnetz 7 bezogen werden, um damit Wärme zu erzeugen, bspw. mittels geeigneter, elektrisch arbeitender Wärmeerzeuger.

Einen bevorzugten Verfahrensablauf zur Ermittlung der Speichermanagementvorgabe $SPMV$ zeigt Fig. 15.

Eingangsgrößen sind die (bevorzugt relativen) Speicherladezustände $SLZ_j$ der einzelnen Wärmespeicher 5, 6, die von Steuerungen der einzelnen Wärmespeicher 5, 6 über eine Kommunikationsschnittstelle an den Steuerrechner 8 übermittelt werden oder aus Kenn- und Sensordaten, beispielsweise aus der mittleren, aktuellen Temperatur $\vartheta_{Sp,m}$ eines Wärmespeichers 5, 6 abgeleitet werden, wobei eine obere Grenztemperatur $\vartheta_{Sp,max}$, welche der bei der Speicherladung max. erzielbaren Speichertemperatur entspricht, und eine untere Grenztemperatur $\vartheta_{Sp,min}$, welche der bei einer Speicherentladung minimal zu erzielenden Temperatur entspricht, berücksichtigt werden:

$$SLZ_j = \frac{\vartheta_{Sp,m,j} - \vartheta_{Sp,\min,j}}{\vartheta_{Sp,\max,j} - \vartheta_{Sp,\min,j}} \cdot 100\%$$

Auch Ergebnisse anderer Verfahren zur Erzeugung von vorzugsweise dimensionslosen Speicherladezuständen $SLZ_j$ können grundsätzlich als Eingangsgrößen der in Fig. 15 dargestellten Logik verwendet werden. Insbesondere bei Latentwärmespeichern oder thermochemischen Wärmespeichern sind vorzugsweise andere, geeignete Verfahren zur Bestimmung des Ladezustandes zu verwenden, welche nicht Gegenstand dieser Erfindung sind. Ähnliche Verfahren wie die zuvor beschriebenen können auch angewandt werden, um den Speicherladezustand $SLz_j$ der gebäudeintegrierten Wärmespeicher, z.B. thermoaktiver Bauelemente, zu ermitteln.

Aus den (bevorzugt relativen) Speicherladezuständen $SLZ_j$ der einzelnen Wärmespeicher 5, 6 mit j = 1,...,m bei insgesamt m Wärmespeichern 5, 6 wird ein mittlerer Gesamt-Speicherladezustand SLZ ermittelt. Dabei ist es besonders vorteilhaft, wenn die Wärmespeicherkapazitäten $Q_j$ der einzelnen Speicher bekannt sind, um eine entsprechende Gewichtung vorzunehmen:

$$SLZ = \frac{\sum_{j=1}^{m} Q_j \cdot SLZ_j}{\sum_{j=1}^{m} Q_j}$$

Für den Fall, dass die Wärmespeicherkapazitäten $Q_j$ der einzelnen Wärmespeicher 5, 6 bspw. aus den Kenndaten nicht bekannt sind, kann ersatzweise auf den arithmetischen Mittelwert zurückgegriffen werden:

$$SLZ = \frac{1}{m} \sum_{j=1}^{m} SLZ_j$$

Sind nur von einigen Wärmespeichern 5, 6 die Wärmespeicherkapazitäten $Q_j$ bekannt, so können die nicht bekannten Wärmespeicherkapazitäten $Q_j$ mit einem Pauschalwert angesetzt und dann eine gewichtete Mittelwertbildung vorgenommen werden, oder es werden zunächst zwei Mittelwerte für die Wärmespeicher 5, 6 mit bekannter Wärmespeicherkapazität $Q_j$ und für die Wärmespeicher 5, 6 mit unbekannter Wärmespeicherkapazität 5, 6 gebildet und anschließend aus diesen beiden Mittelwerten, z.B. durch arithmetische Mittelwertbildung, ein Gesamtmittelwert ermittelt.

Eine weitere Möglichkeit zur Bestimmung des Speicherladezustands $SLZ_j$ eines Wärmespeichers 5, 6 besteht darin, den Speicherladezustand $SLZ_j$ nicht auf die Differenz zwischen minimaler und maximaler Speicherladetemperatur zu beziehen, sondern auf die Differenz zwischen der aktuellen Netz-Vorlauftemperatur $VLT_{Netz}$ und der minimalen Speicherladetemperatur $\vartheta_{Sp,min}$. Dies bietet den Vorteil, dass immer erkennbar ist, wie viel Speicherkapazität bei der aktuellen Netz-Vorlauftemperatur $VLT_{Netz}$ tatsächlich noch genutzt werden kann.

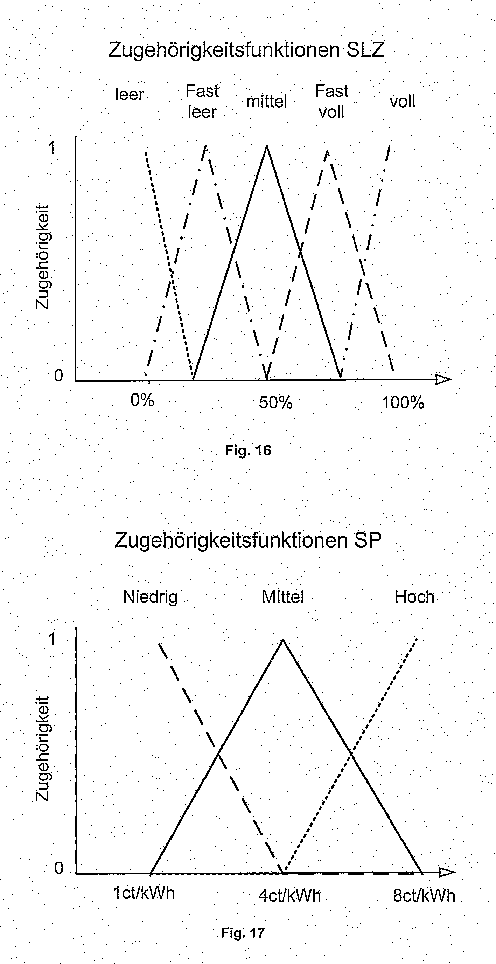

Die Fuzzyfizierung des im Ergebnis erhaltenen mittleren Gesamt-Speicherladezustands SLZ erfolgt anhand der in Fig. 16 beispielhaft dargestellten Zugehörigkeitsfunktionen in der bekannten und bereits ausführlich beschriebenen Weise analog.

Die Fuzzyfizierung des erzielbaren Strompreises $SP$, der über die entsprechend eingerichtete Kommunikationsschnittstelle bspw. von einem Drittanbieter geladen werden kann, erfolgt mit den beispielhaft dargestellten Zugehörigkeitsfunktionen nach Fig. 17.

Die Einheiten des Strompreises sind willkürlich gewählt und können jeweils an die aktuelle Strompreisbandbreite angepasst werden. Die Zugehörigkeitsfunktionen sind hierbei so zu wählen, dass zum einen die tatsächliche Schwankungsbreite der Strompreise *SP* abgebildet werden kann, zum anderen aber auch die wirtschaftliche Aspekte einer konkreten KWK-Anlage (Wärmeversorger 4) berücksichtigt werden können. Idealerweise ist ein 'Hoch' bewerteter zu erzielender Strom(verkaufs)preis *SP* auch unter wirtschaftlichen Gesichtspunkten des Betriebs der KWK-Anlage ein als 'Hoch' zu bewertender Strompreis *SP*. Das Gegenteil wäre z.B. der Fall, wenn ein Strom(verkaufs)preis *SP* von beispielsweise 4ct/kWh als hoch zu bezeichnen wäre, für einen wirtschaftlichen Betrieb der KWK-Anlage aber einen Strom(verkaufs)preis *SP* von 6ct/kWh erlöst werden müsste. Ein solcher Mindesterlös-Strompreis sollte mit der Zugehörigkeitsfunktion 'mittel' bewertet werden. Die Zugehörigkeitsfunktionen gemäß Fig. 17 müssen daher an die konkreten Gegebenheiten anpassbar sein.

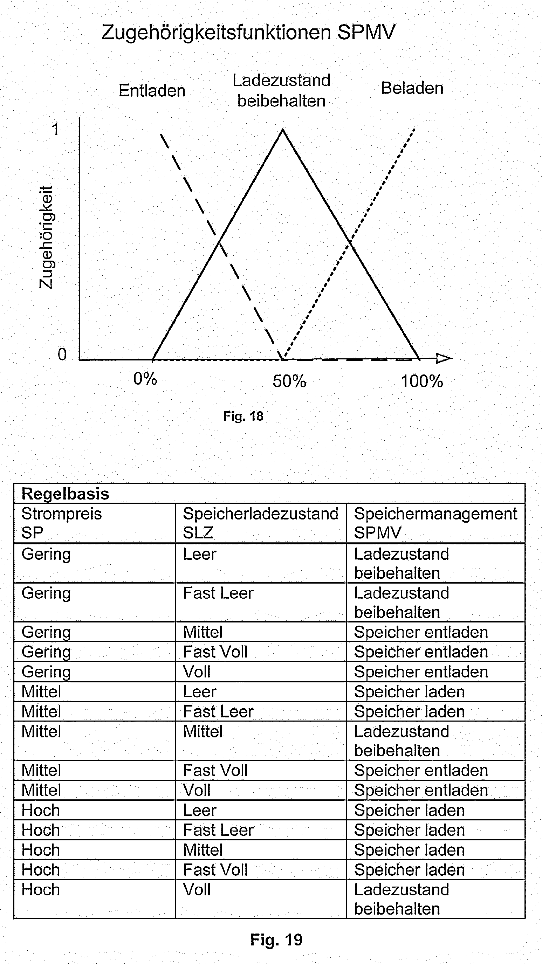

Die Zugehörigkeitsfunktionen für die Zielgröße Speichermanagementvorgabe SPVM sind in Fig. 18 dargestellt. Diese können als Anweisungen insbesondere die drei Zugehörigkeitsfunktionen "Wärmespeicher entladen", "Wärmespeicher-Ladezustand beibehalten" und "Wärmespeicher beladen" beinhalten.

Entsprechend der Regelbasis der Fuzzy-Inferenz werden in einer einfachen Ausführungsform dann aus den Eingangsgrößen Gesamt-Speicherladezustand SLZ und Strompreis *SP* die Werte der Zugehörigkeitsfunktionen für die Speichermanagementvorgabe *SPMV* ermittelt. Eine hier geeignete Regelbasis ist in Fig. 19 dargestellt, die genauso angewendet wird, wie die bereits beschriebenen Regelbasen entsprechend Fig. 7 oder Fig. 11.

Nach der Defuzzyfizierung der Werte dieser Zugehörigkeitsfunktionen für die Speichermanagementvorgabe *SPMV* steht ein Zahlenwert für das Speichermanagement zur Verfügung. Dieser kann als Zielgröße für den Speicherladezustand interpretiert werden.

Der ermittelte Wert der Speichermanagementvorgabe kann an die untergeordneten Speicherladeregelungen bzw. Speicherladesteuerungen, d.h. die Steuerungen der einzelnen Wärmespeicher 5, 6 übertragen werden, die diesen als Sollwert für den Speicherladezustand verwenden, indem sie daraus beispielsweise einen Sollwert für die Speichertemperatur ableiten. Dies kann beispielsweise mit folgender Rechenvorschrift erfolgen:

$$\vartheta_{Sp,m,i} = \left( \vartheta_{Sp,\max,i} - \vartheta_{Sp,\min,i} \right) \cdot SPMV_i + \vartheta_{Sp,\min,i}$$

Der Wert der Speichermanagementvorgabe *SPMV* kann dabei an alle Steuerungen der Wärmespeicher 5, 6 übertragen werden.

Es ist aber auch möglich, eine bestimmte Reihenfolge in der Speicherbeladung bzw. Speicherentladung vorzugeben, z.B. nach verfügbarer Restladekapazität (abgeleitet aus dem Speicherladezustand SLZ) oder nach dem durch die Speicherladung zu erwartenden Leistungsbedarf und dem durch die KWK-Anlage zur Verfügung stehenden Leistungsangebot. Hierdurch kann vermieden werden, dass aufgrund einer Speicherladung für alle Wärmespeicher 5, 6 der ermittelte Leistungsbedarf (Siedlungsversorgungszustand *SVZ*) stark ansteigt und bspw. das Leistungsangebot der KWK-Anlage übersteigt. In diesem Fall werden individuelle Speichermanagementvorgaben *SPMV_j* für die verschiedene Wärmespeicher 5, 6 erzeugt, indem bspw. einige Wärmespeicher 5, 6 die Vorgabe erhalten, den Wärmespeicher zu laden, während andere die Vorgabe erhalten, den Ladezustand beizubehalten.

Eine weitere Ausführungsform zur Ermittlung der Speichermanagementvorgabe besteht darin, zusätzlich den Belastungsgrad *Phi_{KWK}* des Wärmeversorgers 4 (KWK-Anlage) als weitere Eingangsgröße zu verwenden. Dies ist in dem Ablaufdiagramm nach Fig. 15 bereits mit eingezeichnet.

Der Belastungsgrad *Phi_{KWK}* des Wärmeversorgers 4 (KWK Anlage) kann dabei wahlweise nach einer der folgenden Berechnungsmethoden ermittelt werden:

- als mittlerer Modulationsgrad über einen Zeitraum t bei modulierenden Anlagen

- als Verhältnis aus der mittleren elektrischen Leistung in einem Zeitraum t und der elektrischen Nennleistung:

$$Phi_{el,KWK} = \frac{\overline{P_{el}}}{P_{el,Nenn}} = \frac{W_{el}/t}{P_{el,Nenn}}$$

$W_{el}$ bezeichnet dabei die im Zeitraum t mit durch die KWK-Anlage gelieferte elektrische Energie. Dies stellt eine bevorzugte Variante für KWK-Anlagen mit Stromzähler (die gebräuchliche Bezeichnung Stromzähler müsste physikalisch korrekt eigentliche Energiezähler lauten), aber ohne Wärmezähler dar.

- als Verhältnis aus der mittleren thermischen Leistung in einem Zeitraum t und der thermischen Nennleistung der KWK-Anlage:

$$Phi_{th,KWK} = \frac{\overline{\dot{Q}_{therm}}}{\dot{Q}_{therm,Nenn}} = \frac{\dot{Q}_{therm}/t}{\dot{Q}_{therm,Nenn}}$$

$Q_{therm}$ ist die im Zeitraum t erzeugte Wärme. Diese Variante setzt einen Wärmezähler in der KWK-Anlage voraus.

- als Verhältnis aus der mittleren erzeugten elektrischen und thermischen Leistung in einem Zeitraum t und der elektrischen und thermischen Nennleistung:

$$Phi_{KWK} = \frac{\overline{P_{el}} + \overline{\dot{Q}_{therm}}}{P_{el,Nenn} + \dot{Q}_{therm,Nenn}} = \frac{(W_{el} + Q_{therm})/t}{P_{el,Nenn} + \dot{Q}_{therm,Nenn}}$$

- als Verhältnis aus Betriebsdauer $t_{Betrieb}$ in einem Zeitraum t zu der Zeit t bei nichtmodulierenden KWK-Anlagen:

$$Phi_{KWK} = \frac{t_{Betrieb}}{t}$$

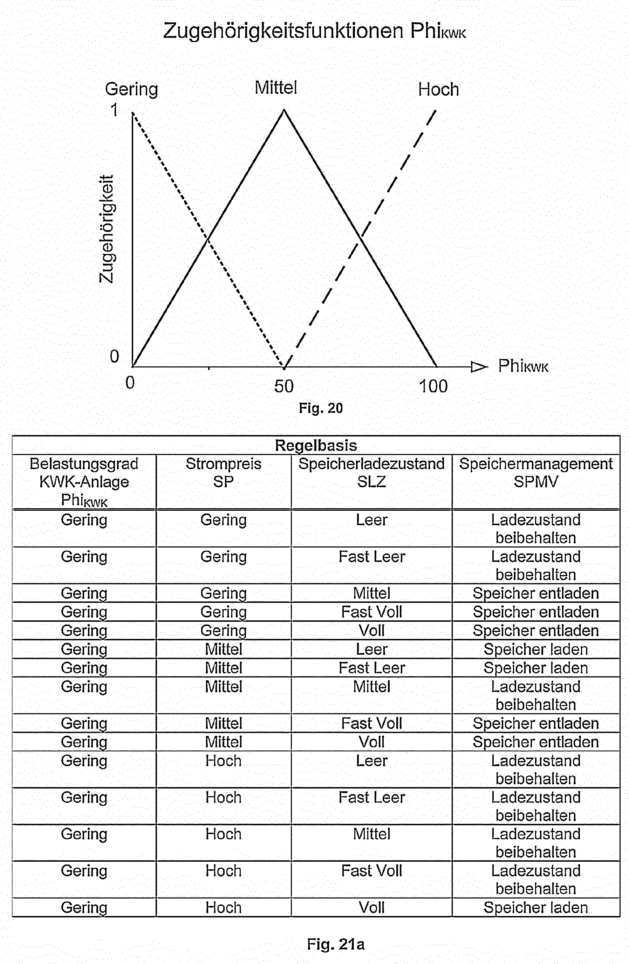

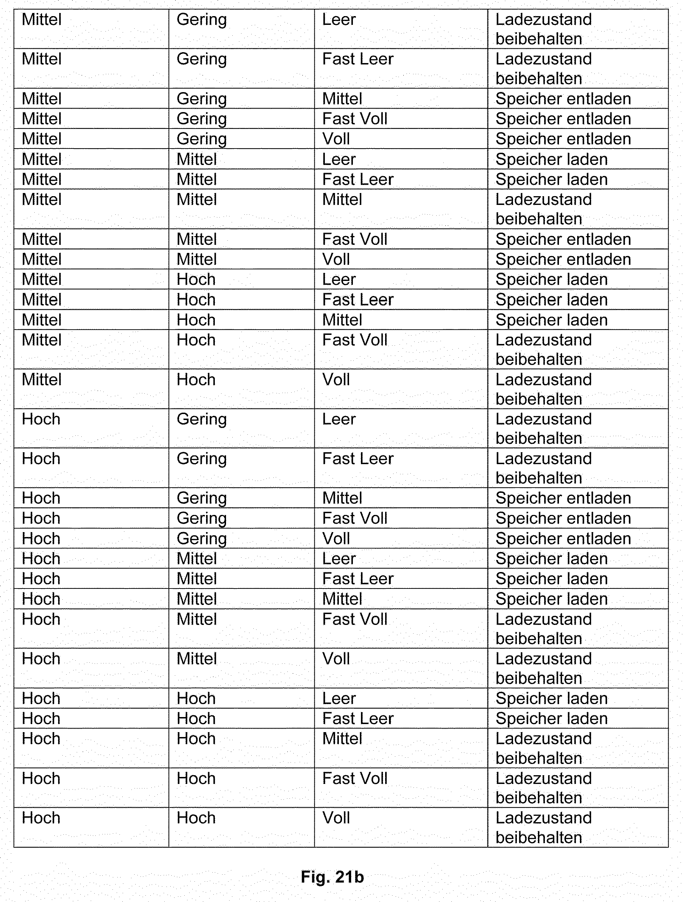

Der nach einer der vorbeschriebenen Möglichkeiten berechnete Belastungsgrad $Phi_{KWK}$ kann dann mit den Zugehörigkeitsfunktionen gemäß Fig. 20 bewertet werden. Die sich daraus ergebenden Werte der Zugehörigkeitsfunktionen werden dann, wie in Fig. 15 dargestellt, in die Fuzzy-Inferenz mit eingegeben, um durch Anwendung der in Fig. 21a, b aufgeteilt auf zwei zusammenzufügende Tabellen beispielhaft wiedergegebenen Regelbasis auch unter Berücksichtigung des Belastungsgrads $Phi_{KWK}$ des Wärmeversorgers 4 die Speichermanagementvorgabe SPMV durch Anwendung einer geeigneten Defuzzyfizierung zu erhalten. Dieses Grundprinzip bei der Anwendung der Fuzzy-Logik wurde bereits beschrieben.

Damit ist nun auch die dritte Eingangsgröße Speichermanagementvorgabe SPMV für die Bestimmung der Stellgröße Netz-Vorlauftemperaturänderung $\Delta VLT_{Netz}$ entsprechend dem in Fig. 12 dargestellten Ablaufdiagramm bekannt.

Die entsprechenden Zugehörigkeitsfunktionen für die Speichermanagementvorgabe SPMV können entsprechend Fig. 18 gewählt werden. Alternativ können die Zughörigkeitsfunktionswerte zu den einzelnen Zugehörigkeitsfunktionen, wie sie in Fig. 15 als Eingangsgrößen für die Defuzzyfizierung ermittelt werden, verwendet werden.

Eine maximale und minimale Änderung der Netz-Vorlauftemperatur $\Delta VLT_{Netz}$ soll dabei vorgebbar und parametrierbar sein, um Anpassungen an die tatsächlichen Gegebenheiten zu ermöglichen.

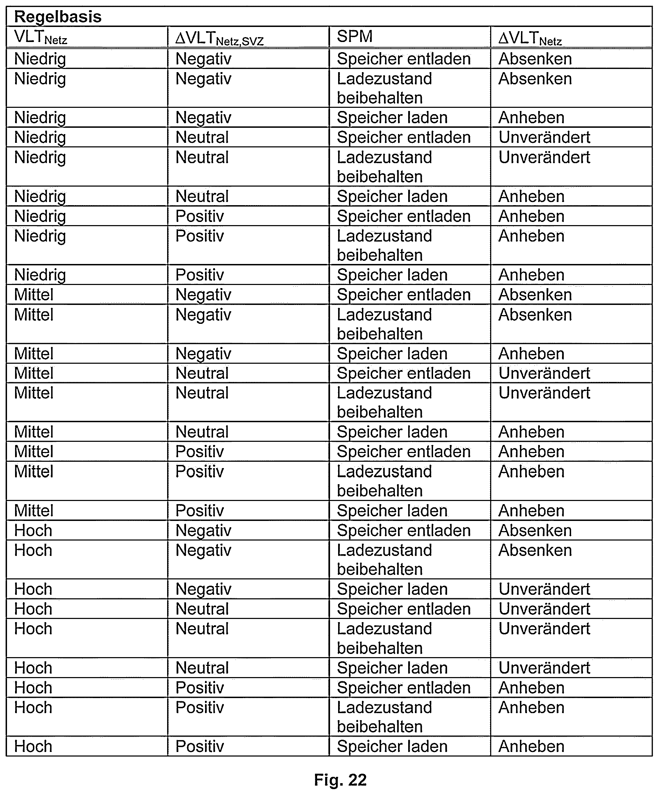

Eine entsprechend Fig. 12 in der Fuzzy-Inferenz verwendbare Regelbasis gemäß einer besonders bevorzugten Ausführungsform kann Fig. 22 entnommen werden. Im Ergebnis kann durch eine übliche Defuzzyfizierung aus den Werten der bspw. in Fig. 14 gezeigten Zughörigkeitsfunktionen für die Netz-Vorlauftemperatur $VLT_{Netz}$ eine einzustellende Netzvorlauftemperatur und daraus dann auch die Änderung der Netz-Vorlauftemperatur $\Delta VLT_{Netz}$ als Stellgröße für den Wärmeversorger 4 ermittelt werden.

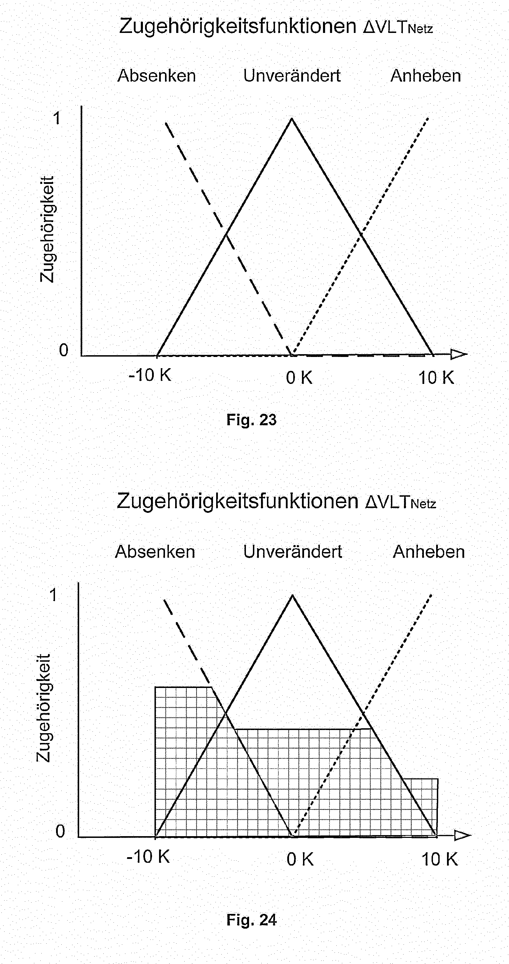

Diese Zugehörigkeitsfunktion der Netz-Vorlauftemperaturänderung $\Delta VLT_{Netz}$ für die Defuzzyfizierung ist in den Fig. 23 und 24 dargestellt. Die Eingangsgrößen der Defuzzyfizierung sind reine Zahlenwerte, also bspw. $\mu_{VLTAbs}$ = 0,7. Dies bedeutet, das die Zugehörigkeit zur Fuzzy-Variablen 'Absenken' bei 0,7 liegt. Liegen die weiteren Zugehörigkeiten beispielsweise bei $\mu_{VLTUnv}$ = 0,4 und $\mu_{VLTAnh}$ = 0,1, dann ergibt die Fuzzy-Komposition die Fig. 24 gemustert dargestellte Fläche unter der Zugehörigkeitsfunktion der Netz-Vorlauftemperaturänderung $\Delta VLT_{Netz}$. Als Defuzzyfizierungsmthode kann dann z.B. die Schwerpunktmethode verwendet werden. Dabei wird der Schwerunkt der gemusterten Fläche bestimmt. Der Abzissenwert des Schwerpunktes ist dann die 'scharfe' Ausgangsgröße. Dies sind dem Fachmann bekannte Standard-Fuzzy-Methoden.

Durch die Anpassung der Netz-Vorlauftemperatur $VLT_{Netz}$ wird damit die Wärmeversorgung von Wärmeverbrauchern in Gebäuden gesteuert bzw. streng genommen sogar geregelt, weil über die Ermittlung des Siedlungsversorgungszustands eine Rückkopplung auf eine Änderung der Netz-Vorlauftemperatur $VLT_{Netz}$ im regelungstechnischen Sinne insofern erfolgt, als der Siedlungsversorgungszustand SVZ zumindest indirekt aus Messgrößen in dem Regelkreis hinter der Stellgröße, die auf den zentralen Wärmeversorger 4 einwirkt, gemessen werden und so die Auswirkung der durch die Stellgröße bewirkten Änderungen anzeigen. Der Siedlungsversorgungszustand *SVZ* soll auf einen Sollwert geregelt werden. Allerdings handelt sich nicht um eine klassische Regelung des Siedlungsversorgungszustands, deren Ergebnis eine Angleichung der aktuellen Siedlungsversorgungszustands *SVZ* an dessen Sollwert $XS_{SVZ}$ ist, weil auch dauerhafte Abweichungen von diesem Regelergebnis durch andere Einflussgrößen vorgegeben werden können, die eher einen steuernden Einfluss haben. Erfindungsgemäß wird also eine komplexe Steuerung mit regelungstechnischen Komponenten zur Steuerung der Wärmeversorgung von Wärmeverbrauchern in Gebäuden 2 einer Siedlung 1 vorgeschlagen. Dabei ist das Regel-Steuer-Konzept erfindungsgemäß besonders geeignet für eine gekoppelte Wärme- und Stromerzeugen mittels sog. KWK-Anlagen.

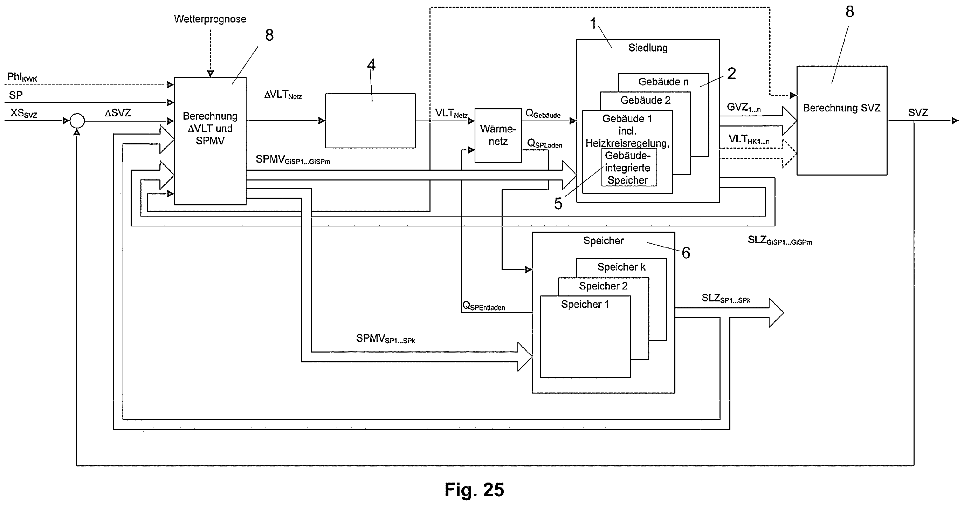

Fig. 25 zeigt ein regelungstechnisches Blockschaltbild des erfindungsgemäß vorgeschlagenen Gesamtsystems, das erfindungsgemäß durch einen geeigneten Steuerrechner 8 mit Recheneinheiten 9, 10 und Kommunikationsschnittstellen zu den in der Siedlung vorhandenen Komponenten implementiert und realisiert werden kann.

Die erfindungsgemäße Steuerung der gekoppelten Wärme- und Stromerzeugung durch den Wärmeversorger 4 ist so ausgelegt, dass sie unter Einbeziehung der zur Verfügung stehenden Wärmespeicher 5, 6 das Wärmeangebot dem Wärmebedarf der Abnehmer anpasst und dabei eine unter ökologischen und ökonomischen Gesichtspunkten verbesserte Ansteuerung erreicht.

Zur Anpassung an den tatsächlichen Wärmebedarf in der Siedlung 1 wird in den (oder zumindest einigen) Gebäuden 2 der Siedlung 1 ein den Wärmebedarf der Gebäude 2 anzeigender Gebäudeversorgungszustand $GVZ_i$ ermittelt. Dies kann vorzugsweise aus Daten der Heizkosten- bzw. Verbrauchswerterfassung in Datensammlern eines Verbrauchserfassungssystems erfolgen, die zur Ermittlung eines solchen Gebäudeversorgungszustands $GVZ_i$ eingerichtet sind. Aus den dem Steuerrechner 8 übermittelten Gebäudeversorgungszuständen $GVZ_i$, sowie optional der ebenso übermittelten Vorlauftemperatur $VLT_{HK,i}$ in den Heizungsanlagen der Gebäude 2, wird erfindungsgemäß ein den Wärmebedarf der Gesamtsiedlung beschreibender Siedlungsversorgungszustand *SVZ* ermittelt.

Bei einem insgesamt eine Unterversorgung der Gebäude 2 mit Wärme anzeigenden (bspw. negativen) Siedlungsversorgungszustand *SVZ* muss zum Erreichen einer ausreichenden Wärmeversorgung der Gebäude die Netz-Vorlauftemperatur $VLT_{Netz}$ angehoben werden, unabhängig davon, ob eine Speichermanagementvorgabe *SPMV* zur Berücksichtigung der kombinierten Strom- und Wärmeerzeugung eine Absenkung der Vorlauftemperatur ermöglichen oder nahelegen würde. Andernfalls kommt es zu signifikanten Komforteinbußen in der Wärmeversorgung, die nicht gewünscht und nicht hinnehmbar sind.

Regelungstechnisch wird dies dadurch umgesetzt, dass der aktuell ermittelte Siedlungsversorgungszustand *SVZ* mit einem Sollwert $XS_{SVZ}$ des Siedlungsversorgungszustands verglichen wird, der den gewünschten Komforteinstellungen entspricht. Die sich daraus ergebende Regelabweichung $\Delta SVZ$ geht in Bestimmung der Stellgröße Netz-Vorlauftemperatur $VLT_{Netz}$ bzw. deren Änderung $\Delta VLT_{Netz}$ mit ein. Hierbei hat es sich erfindungsgemäß als besonders bevorzugt herausgestellt, aus der Regelabweichung $\Delta SVZ$ des Siedlungsversorgungszustands das Änderungspotential $\Delta VLT_{Netz,SVZ}$ zu ermitteln, das die mögliche Änderung der Netz-Vorlauftemperatur $VLT_{Netz}$ allein unter Berücksichtigung des Siedlungsversorgungszustands *SVZ* anzeigt. Gibt das Änderungspotential $\Delta VLT_{Netz,SVZ}$ eine notwendige Erhöhung der Netz-Vorlauftemperatur $VLT_{Netz}$ vor, ist es besonders einfach möglich, diese zur Vermeidung eines Diskomfort-Zustand auch umsetzende Erhöhung der Netz-Vorlauftemperatur auch umzusetzen, unabhängig von den weiteren Eingangsgrößen. Dies kann besonders einfach in der bevorzugt vorgeschlagenen Fuzzy-Logik umgesetzt werden, weil entsprechende Werte der Zugehörigkeitsfunktion in der Regelbasis der Fuzzy-Inferenz auch so verarbeitet werden können, dass im Ergebnis die Netz-Vorlauftemperatur $VLT_{Netz}$ angehoben wird.

Zeigt der Siedlungsversorgungszustand *SVZ* dagegen an, dass die Netz-Vorlauftemperatur $VLT_{Netz}$ abgesenkt werden kann, so kann es abweichend davon unter ökonomisch-ökologischen Gesichtspunkten, insbesondere bei einem durch einen hohen Strompreis *SP* oder dgl. Information angezeigten Strombedarf, dennoch sinnvoll sein, die Netz-Vorlauftemperatur $VLT_{Netz}$ anzuheben und die dabei entstehende Wärme in Wärmespeichern 5, 6 zwischen zu speichern. Dies wird erfindungsgemäß durch die Speichermanagementvorgabe *SPMV* erreicht, die aus dem Steuerrechner 8 von den einzelnen Wärmespeichern 5, 6 (zu den denen auch deren lokale Steuerungen zählen) mitgeteilten Speicherladezuständen $SLZ_j$ ermittelt wird.

In Fig. 25 wird zwischen dezentralen Wärmespeichern 5 in den Gebäuden 2 und zentralen Wärmespeichern 6 hinsichtlich der Kommunikationswege unterschieden. Dies ist möglich, erfindungsgemäß aber nicht unbedingt zwingend.

Die Speichermanagementvorgabe *SPMV* wird insbesondere unter Verwendung der mitgeteilten Speicherladezuständen $SLZ_j$ ermittelt. Dabei können erfindungsgemäß auch der Belastungsgrad des Wärmeversorgers $Phi_{KWK}$ und, vor allem bei den besonders bevorzugten KWK-Anlagen als Wärmeversorger 4, der aktuelle Strompreis *SP* als Indikator für den Strombedarf und die Wirtschaftlichkeit eines Betriebs des Wärmeversorgers 4 mit berücksichtigt werden. Es besteht zudem die Möglichkeit, Prognosedaten über den Heiz-Wärmebedarf der nächsten Tage, beispielsweise abgeleitet aus Wettervorhersagen, mit in das Speichermanagement einzubeziehen. Ist beispielsweise ein sinkender Wärmebedarf zu erwarten, kann es sinnvoll sein, die Speicher nicht zu beladen. Ebenso lassen sich Wetterprognosen nutzen, um Prognosen für den Strompreis abzuleiten. So ist bei starkem Wind mit einem hohen Angebot an Windstrom und entsprechend niedrigen Strompreisen zu rechnen. Bei der Prognose von fallenden Strompreisen kann es sinnvoll sein, die Speicher zu laden, um sie bei niedrigen Strompreisen entladen zu können und keinen Strom produzieren zu müssen, um den Wärmedarf in der Siedlung 1 abzudecken.

Die Speichermanagementvorgabe *SPMV* kann insbesondere eine Wärmespeicherbeladung, ein Beibehalten des Speicherzustands der Wärmespeicher und eine Wärmespeicherentladung vorgeben. Die Steuerung der gekoppelten Wärme- und Stromerzeugung muss so ausgelegt sein, dass sie, unter Einbeziehung der zur Verfügung stehenden Speicher, das Wärmeangebot dem Wärmebedarf der Abnehmer anpasst.

So muss beispielsweise bei einem negativen Siedlungsversorgungszustand *SVZ,* der eine Unterversorgung der Gebäude anzeigt, die Netz-Vorlauftemperatur angehoben werden, unabhängig davon, ob das Speichermanagement eine Absenkung der Vorlauftemperatur ermöglichen würde. Zeigt der Siedlungsversorgungszustand *SVZ* an, dass die Netz-Vorlauftemperatur abgesenkt werden kann, so kann es dennoch sinnvoll sein, die Netz-Vorlauftemperatur anzuheben, weil die Speichermanagementvorgabe eine Speicherladung vorgibt.

Erfindungsgemäß kann die Speichermanagementvorgabe *SPMV* auch jeweils an die Wärmespeicher 5, 6 bzw. deren - in den Figuren grafisch nicht dargestellte - lokale Steuerungen gesendet wird, damit das Verhalten der Wärmespeicher 5, 6 zum Speichern bzw. Abgeben von Wärme mit der erfindungsgemäß vorgeschlagenen Steuerung korreliert.

Die Möglichkeiten, im Speichermanagement die Wärmeabnahme kurzfristig zu erhöhen bzw. zu senken, sind im Folgenden noch einmal zusammengestellt.

Als Maßnahmen zur Erhöhung der Wärmeabnahme im Wärmeverteilungsnetz 3 kann die Netz-Vorlauftemperatur $VLT_{Netz}$ erhöht werden. Dies hat die Speicherung einer größeren Wärmemenge im Wärmeträger (Transportmedium des Wärmeverteilungsnetzes 3) zur Folge. Sofern diese Wärmemenge nicht ad hoc durch Wärmeverbraucher abgenommen wird, besteht die Möglichkeit der Beladung zentraler Wärmespeicher 6. Auch im Gebäude 2 selbst bestehen weitere Möglichkeiten. So kann als kurzfristige Maßnahme die Solltemperatur für eine Warmwasserbereitung in den Trink- bzw. Brauchwarmwasserspeichern erhöht werden. Dies führt zu einer Speicherladung, bis die erhöhten Sollwerte erreicht sind. Weiter können thermoaktive Bauteile oder sonstige dezentrale Wärmespeicher 5 beladen werden. Ggf. kann im Rahmen einer Gebäudeversorgungszustandsregelung der Sollwert für den Gebäudeversorgungszustand *GVZ* angehoben werden. Dies führt zu einer Anhebung der Vorlauftemperatur des betreffenden Heizkreises im Gebäude 2, ggf. auch über die Vorlauftemperatur gemäß einer eingestellten Heizkennlinie hinaus. Hierbei sind aber erhöhte Wärmeverluste in Kauf zu nehmen, so dass diese Maßnahme unter ökonomischen und ökologischen Gesichtspunkten kritisch betrachtet werden muss. Als kurzfristige Maßnahme zum Ausgleich von Wärmeangebotsspitzen bietet sich diese Maßnahme aber in jedem Fall an.

Zur Reduzierung der Wärmeabnahme in dem Wärmeverteilungsnetz 3 kann die Netz-Vorlauftemperatur $VLT_{Netz}$ abgesenkt werden. Die Höhe bzw. vertretbare Dauer einer solchen Absenkung ergibt sich aus dem Verlauf des Siedlungsversorgungszustands *SVZ*: sobald dieser einen kritischen Wert annimmt, muss die Netz-Vorlauftemperatur $VLT_{Netz}$ wieder angehoben werden. Um die von dem Wärmeversorger abzugebende Wärmemenge zu reduzieren, ist es je nach Speicherladezustand $SLZ_j$ auch sinnvoll und möglich, die zentralen oder dezentralen Wärmespeichern 6, 5 zu entladen. Als Maßnahmen, die ggf. keine unmittelbar den Komfort betreffenden Wirkung zeigen, insbesondere wenn diese nur für einen gewissen Maximalzeitraum angewendet werden, können auch die Solltemperatur für z.B. Brauch-Warmwasserspeicher im Gebäude unter Gewährleistung einer Mindestsolltemperatur und/oder der Sollwert wird den Gebäudeversorgungszustand *GVZ* abgesenkt werden. Letzteres führt zur Absenkung der Vorlauftemperatur des betreffenden Heizkreises im Gebäude 2. Die Höhe bzw. vertretbare Dauer der Absenkung ergibt sich aus dem Verlauf des Gebäudeversorgungszustands *GVZ*: sobald dieser einen kritischen Wert annimmt, muss die Vorlauftemperatur im Heizkreis wieder angehoben werden.

Um ein Stromüberangebot im öffentlichen Stromnetz 7 oder von dem Wärmeversorger 4 zu nutzen, kann eine Wärmeerzeugung mittels Strom erfolgen bzw. eine solche zugeschaltet werden.

Diese Maßnahmen werden erfindungsgemäß bei der Ermittlung der Speichermanagementvorgabe zumindest implizit berücksichtigt.

Unabhängig davon wird die Speichermanagementvorgabe *SPMV* mit zur Ermittlung der Stellgröße Netz-Vorlauftemperaturänderung $\Delta VLT_{Netz}$ herangezogen, die durch den Wärmeversorger 4 umgesetzt wird, indem dieser die Netz-Vorlauftemperatur $VLT_{Netz}$ in dem Wärmeverteilungsnetz 3 einstellt, d.h. einen Wärmeträger auf diese Temperatur erhitzt.

Somit wird durch die Erfindung ein optimierter Betrieb eines Wärmeversorgers, insbesondere einer KWK-Anlagen unter Berücksichtigung sowohl des Wärmebedarfs in der Siedlung als auch des Strombedarfs bzw. Stromangebots in dem öffentlichen Stromnetz 7 erreicht.

Bezugszeichenliste:

| | | |
|---|---|---|
| 1 | Siedlung | |
| 2 | Gebäude | |
| 3 | Wärmeverteilungsnetz | |
| 4 | zentraler Wärmeversorger | |
| 5 | dezentraler, gebäudeinterner oder gebäudeintegrierter Wärmespeicher | |
| 6 | zentraler Wärmespeicher | |
| 7 | öffentliches Netz, Stromnetz | |
| 8 | Steuerrechner | |
| 9 | Recheneinheit zur Berechnung eines Siedlungsversorgungszustands | |
| 10 | Recheneinheit zur Steuerung des zentralen Wärmeversorgers | |
| 11 | Datensammler | |

| | |
|---|---|
| $VLT_{Netz}$ | Netz-Vorlauftemperatur |
| $VLT_{HK}$ | Gebäude- oder Heizkreis-Vorlauftemperatur |
| $\Delta VLT_{Netz}$ | Netz-Vorlauftemperaturänderung, Steuersignal bzw. Stellgröße |
| $\Delta VLT_{Netz\text{-}HK}$ | Netzübertemperatur |
| $\Delta VLT_{Netz,SVZ}$ | Netz-Vorlauftemperaturänderung in alleiniger Abhängigkeit von dem Siedlungsversorgungszustand, Netz-Vorlauftemperatur-Änderungspotential |
| $SVZ$ | Siedlungsversorgungszustand |
| $\Delta SVZ$ | (Regel-)Abweichung des Siedlungsversorgungszustands |
| $XS_{SVZ}$ | Sollwert des Siedlungsversorgungszustands |
| $GVZ_i$ | Gebäudeversorgungszustand des i-ten Gebäudes |
| GuVZ | Gebäudeunterversorgungszustand |
| GueVZ | Gebäudeüberversorgungszustand |
| $SLZ_j$ | Speicherladezustand des j-ten Wärmespeichers |
| $SLZ$ | mittlerer Gesamt-Speicherladezustand |
| $Phi_{KWK}$ | Belastungsgrad des Wärmeversorgers |
| SPMV | Speichermanagementvorgabe |
| SP | Strompreis |
| WP | Wetterprognosedaten |
| $SP_{Daten}$ | Nenndaten der einzelnen Wärmespeicher |

**Patentansprüche**

1. Verfahren zur Steuerung der Wärmeversorgung von Wärmeverbrauchern in Gebäuden (2) einer Siedlung (1) mittels eines zentralen Wärmeversorgers (4), in dem ein Wärmeträger erhitzt und über ein Wärmeverteilungsnetz (3) den Wärmeverbrauchern in den Gebäuden (2) der Siedlung (1) zugeführt wird, wobei ein Wärmeverbraucher in einem Gebäude (2) eine zentrale Gebäudeheizungsanlage ist, welche in einem Heizkreis angeschlossene Heizkörper oder Heizflächen zur Beheizung einzelner Räume der Gebäude (2) aufweist, wobei für ein an das Wärmeverteilungsnetz (3) angeschlossenes Gebäude (2) ein den Wärmebedarf anzeigender Gebäudeversorgungszustand ($GVZ_i$) ermittelt wird, **dadurch gekennzeichnet, dass** unter Verwendung von Gebäudeversorgungszuständen ($GVZ_i$) der in der Siedlung (1) zusammengefassten Gebäude (2) ein den Wärmebedarf der gesamten Siedlung (1) anzeigender Siedlungsversorgungszustand ($SVZ$) ermittelt wird und dass der zentrale Wärmeversorger (4) in Abhängigkeit von diesem Siedlungsversorgungszustand ($SVZ$) gesteuert wird,

   - wobei zur Steuerung des zentralen Wärmeversorgers (4) in Abhängigkeit von dem Siedlungsversorgungszustand ($SVZ$) die Abweichung ($\Delta SVZ$) des Siedlungsversorgungszustands ($SVZ$) zu einem Sollwert des Siedlungsversorgungszustands ($XS_{SVZ}$) ermittelt wird und abhängig von dem Wert der Abweichung eine Netz-Vorlauftemperaturänderung ($\Delta VLT_{Netz}$) für die Netz-Vorlauftemperatur ($VLT_{Netz}$) oder eine Netz-Vorlauftemperatur ($VLT_{Netz}$) bestimmt wird, und
   - wobei die Netz-Vorlauftemperaturänderung ($\Delta VLT_{Netz}$) oder die Netz-Vorlauftemperatur ($VLT_{Netz}$) zusätzlich zu der Abhängigkeit von dem Siedlungsversorgungszustand ($SVZ$) auch in Abhängigkeit von einer Speichermanagementvorgabe ($SPMV$) ermittelt wird, welche den Speicherladezustand ($SLZ_j$) von in dem Wärmeverteilungsnetz (3) angeschlossenen zentralen und/oder dezentralen Wärmespeichern (6, 5) berücksichtigt.

2. Verfahren nach Anspruch 1, **dadurch gekennzeichnet, dass** bei der Ermittlung des Siedlungsversorgungszustands ($SVZ$) die Differenz ($\Delta VLT_{Netz\text{-}HK}$) der Netz-Vorlauftemperatur ($VLT_{Netz}$) in dem Wärmeverteilungsnetz (3) und der Vorlauftemperatur in mindestens einem Heizkreis ($VLT_{HK}$) eines Gebäudes (2) der Siedlung (1) mit berücksichtigt wird.

3. Verfahren nach einem der vorhergehenden Ansprüche, **dadurch gekennzeichnet, dass** der Siedlungsversorgungszustand ($SLZ$), die Netz-Vorlauftemperaturänderung ($\Delta VLT_{Netz}$), die Netzvorlauftemperatur ($VLT_{Netz}$) und/oder die Speichermanagementvorgabe ($SPMV$) unter Anwendung einer Fuzzy-Logik ermittelt werden.

4. Verfahren nach einem der vorhergehenden Ansprüche, **dadurch gekennzeichnet, dass** die Abhängigkeit der Netz-Vorlauftemperaturänderung ($\Delta VLT_{Netz}$) oder die Netz-Vorlauftemperatur ($VLT_{Netz}$) in Abhängigkeit der Außentemperatur ($\vartheta_A$) in der Siedlung (1) als Kennlinie der Netzvorlauftemperaturänderung ($\Delta VLT_{Netz}(\vartheta_A)$ oder der Netzvorlauftemperatur $(VLT_{Netz}(\vartheta_A))$ gelernt wird und für eine aktuelle Außentemperatur ($\vartheta_A$) eine Vorlauftemperaturänderung ($\Delta VLT_{Netz}$) oder eine Netzvorlauftemperatur ($VLT_{Netz}$) aus der Kennlinie abgelesen und als Basiswert für die Steuerung des zentralen Wärmeversorgers (4) verwendet wird.

5. Verfahren nach einem der vorhergehenden Ansprüche, **dadurch gekennzeichnet, dass** die Netz-Vorlauftemperaturänderung ($\Delta VLT_{Netz}$) oder die Netz-Vorlauftemperatur ($VLT_{Netz}$) zusätzlich zu der Abhängigkeit von dem Siedlungsversorgungszustand ($SVZ$) auch in Abhängigkeit von der Netz-Vorlauftemperatur $(VLT_{Netz})$ ermittelt wird.

6. Verfahren nach einem der vorhergehenden Ansprüche, **dadurch gekennzeichnet, dass** bei der Bestimmung der Speichermanagementvorgabe $(SPMV)$ ein Belastungsgrad ($Phi_{KWK}$) des zentralen Wärmeversorgers (4) und/oder der Strompreis ($SP$) berücksichtigt wird.

7. Verfahren nach einem der vorhergehenden Ansprüche, **dadurch gekennzeichnet, dass** bei der Ermittlung der Netz-Vorlauftemperaturänderung ($\Delta VLT_{Netz}$), der Netzvorlauftemperatur ($VLT_{Netz}$) und/oder der Speichermanagementvorgabe ($SPMV$) die Daten einer Wetterprognose ($WP$) und/oder Gebäudekenndaten berücksichtigt werden.

8. Vorrichtung zur Steuerung der Wärmeversorgung von Wärmeverbrauchern in Gebäuden (2) einer Siedlung (1) mittels eines zentralen Wärmeversorgers (4) umfassend einen mit Kommunikationsschnittstellen zum Empfangen und Senden von Daten ausgestatteten Steuerrechner (8), **dadurch gekennzeichnet, dass** an den Steuerrechner (8) Steuerungen von zentralen und/oder dezentralen Wärmespeichern (6, 5) anschließbar sind und dass der Steuerrechner (8) dazu eingerichtet ist,

- aus empfangenen Gebäudeversorgungszuständen ($GVZ_i$), welche jeweils den Wärmebedarf von Wärmeverbrauchern in einem Gebäude (2) der Siedlung (1) anzeigen, einen Siedlungsversorgungszustand ($SVZ$) zu ermitteln, welcher den Wärmebedarf der gesamten Siedlung (1) anzeigt,
- Speicherladezustände ($SLZ_j$) von den Steuerungen der zentralen und/oder dezentralen Wärmespeicher (6, 5) zu erhalten, und
- als Steuersignal eine Netz-Vorlauftemperaturänderung ($\Delta VLT_{Netz}$) für die Netz-Vorlauftemperatur ($VLT_{Netz}$) oder die Netz-Vorlauftemperatur ($VLT_{Netz}$) bestimmt ($\Delta VLT_{Netz}$ oder $VLT_{Netz}$) in Abhängigkeit von diesem Siedlungsversorgungszustand ($SVZ$) und diesen Speicherladezuständen ($SLZ_j$) zu erzeugen und an den zentralen Wärmeversorger (4) auszugeben.

9. Vorrichtung nach Anspruch 8, **dadurch gekennzeichnet, dass** der Steuerrechner (8) dazu eingerichtet ist, die Abweichung ($\Delta SVZ$) des Siedlungsversorgungszustands ($SVZ$) zu einem Sollwert ($XS_{SVZ}$) des Siedlungsversorgungszustands ($SVZ$) zu ermitteln und das Steuersignal ($\Delta VLT_{Netz}$ oder $VLT_{Netz}$) in Abhängigkeit von dieser Abweichung ($\Delta SVZ$) zu ermitteln.

10. Vorrichtung nach Anspruch 8 oder 9, **dadurch gekennzeichnet, dass** der Steuerrechner (8) dazu eingerichtet ist, jeweils eine Speichermanagementvorgabe ($SPMV_j$) an die angeschlossenen Steuerungen der einzelnen zentralen und/oder dezentralen Wärmespeicher (6, 5) zu versenden.

**Claims**

1. A method for controlling the heating supply for heat consumers in buildings (2) of a settlement (1) by means of a central heat supplier (4), in which a heat transfer medium is heated and fed to the heat consumers in the buildings (2) of the settlement (1) via a heat distribution network (3), wherein a heat consumer in a building (2) is a central building heating installation which is provided with heating elements or heating surfaces for heating individual rooms of the building (2) connected in a heating circuit, wherein a building supply status ($GVZ_i$) indicating the heating requirement is determined for a building (2) connected to the heat distribution network (3), **characterized in that** by using the building supply statuses ($GVZ_i$) for the buildings (2) collected into the settlement (1), a settlement supply status ($SVZ$) indicating the heating requirement for the entire settlement (1) is determined and **in that** the central heat supplier (4) is controlled as a function of said settlement supply status ($SVZ$),

- wherein, in order to control the central heat supplier (4) as a function of the settlement supply status ($SVZ$), the deviation ($\Delta SVZ$) of the settlement supply status ($SVZ$) from a nominal value for the settlement supply status ($XS_{SVZ}$) is determined and, depending on the value of the deviation, a network flow temperature change ($\Delta VLT_{Netz}$) for the network flow temperature ($VLT_{Netz}$) or a network flow temperature ($VLT_{Netz}$) is determined, and
- wherein, in addition to the dependency on the settlement supply status ($SVZ$), the network flow temperature change ($\Delta VLT_{Netz}$) or the network flow temperature ($VLT_{Netz}$) is also determined as a function of an accumulator management specification ($SPMV$) which takes into account the accumulator storage status ($SLZ_j$) of the central and/or local heat stores (6, 5) connected into the heat distribution network (3).

2. The method as claimed in claim 1, **characterized in that** during the determination of the settlement supply status ($SVZ$), the difference ($\Delta VLT_{Netz-HK}$) between the network flow temperature ($VLT_{Netz}$) in the heat distribution network (3) and the flow temperature in at least one heating circuit ($VLT_{HK}$) of a building (2) of the settlement (1) is also taken into consideration.

3. The method as claimed in one of the preceding claims, **characterized in that** the settlement supply status ($SVZ$), the network flow temperature change ($\Delta VLT_{Netz}$), the network flow temperature ($VLT_{Netz}$) and/or the accumulator management specification ($SPMV$) are determined by applying fuzzy logic.

4. The method as claimed in one of the preceding claims, **characterized in that** the dependency of the network flow temperature change ($\Delta VLT_{Netz}$) or the network flow temperature ($VLT_{Netz}$) is learned as a function of the outside temperature ($\vartheta_A$) in the settlement (1) as a characteristic curve for the network flow temperature change ($\Delta VLT_{Netz}(\vartheta_A)$) or the network flow temperature ($VLT_{Netz}(\vartheta_A)$), and for an actual outside temperature ($\vartheta_A$), a flow temperature change ($\Delta VLT_{Netz}$) or a network flow temperature ($VLT_{Netz}$) is read off from the characteristic curve and used as the base value for controlling the central heat supplier (4).

5. The method as claimed in one of the preceding claims, **characterized in that** in addition to the dependency on the settlement supply status ($SVZ$), the network flow temperature change ($\Delta VLT_{Netz}$) or the network flow temperature ($VLT_{Netz}$) is also determined as a function of the network flow temperature ($VLT_{Netz}$).

6. The method as claimed in one of the preceding claims, **characterized in that** during the determination of the accumulator management specification ($SPMV$), a load factor ($Phi_{KWK}$) of the central heat supplier (4) and/or the price of electricity ($SP$) is taken into account.

7. The method as claimed in one of the preceding claims, **characterized in that** during the determination of the network flow temperature change ($\Delta VLT_{Netz}$), the network flow temperature ($\Delta VLT_{Netz}$) and/or the accumulator management specification ($SPMV$), data from a weather forecast (WP) and/or building characteristics are taken into consideration.

8. A device for controlling the heating supply for heat consumers in buildings (2) of a settlement (1) by means of a central heat supplier (4), comprising a control processor (8) provided with communication interfaces for receiving and transmitting data, **characterized in that** controls for the central and/or local heat accumulators (6, 5) can be connected to the control processor (8), and **in that** the control processor (8) is configured in a manner such that

- from received building supply statuses ($GVZ_i$) which respectively indicate the heating requirement for heat consumers in a building (2) of the settlement (1), a settlement supply status ($SVZ$) can be determined which indicates the heating requirement for the entire settlement (1),
- accumulator storage statuses ($SLZ_j$) can be received from the controls for the central and/or local heat accumulators (6, 5), and
- as a control signal, a network flow temperature change ($\Delta VLT_{Netz}$) for the network flow temperature ($VLT_{Netz}$) or the network flow temperature ($VLT_{Netz}$) ($\Delta VLT_{Netz}$ or $VLT_{Netz}$) can be determined as a function of said settlement supply status ($SVZ$) and said accumulator storage status ($SLZ_j$) and output to the central heat supplier (4).

**9.** The device as claimed in claim 8, **characterized in that** the control processor (8) is configured in a manner such that the deviation ($\Delta SVZ$) of the settlement supply status *(SVZ)* from a nominal value ($XS_{SVZ}$) of the settlement supply status *(SVZ)* can be determined and the control signal ($\Delta VLT_{Netz}$ or $VLT_{Netz}$) can be determined as a function of said deviation ($\Delta SVZ$).

**10.** The device as claimed in claim 8 or claim 9, **characterized in that** the control processor (8) is configured in a manner such that a respective accumulator management specification ($SPMV_j$) can be sent to the connected controls of the individual central and/or local heat accumulators (6, 5).

**Revendications**

**1.** Procédé et dispositif de commande de l'alimentation en chaleur de consommateurs thermiques dans des bâtiments (2) d'un lotissement (1) au moyen d'un distributeur d'énergie thermique central (4) dans lequel un caloporteur est chauffé et est acheminé par un réseau de distribution de chaleur (3) aux consommateurs thermiques dans les bâtiments (2) du lotissement (1), un consommateur thermique dans un bâtiment (2) étant une installation centrale de chauffage de bâtiment, laquelle comporte des radiateurs de chauffage ou des surfaces de chauffage raccordés dans un circuit de chauffage pour chauffer des pièces individuelles des bâtiments (2), un état d'alimentation de bâtiment ($GVZ_i$) affichant le besoin en chaleur étant déterminé pour un bâtiment (2) raccordé au réseau de distribution de chaleur (3), **caractérisé en ce qu'**en utilisant les états d'alimentation de bâtiment ($GVZ_i$) des bâtiments (2) réunis dans le lotissement (1) un état d'alimentation du lotissement (*SVZ*) affichant le besoin en chaleur de tout le lotissement (1) est déterminé et **en ce que** le distributeur central de chaleur (4) est commandé en fonction de cet état d'alimentation du lotissement (*SVZ*),

- pour commander le distributeur central de chaleur (4) en fonction de l'état de distribution du lotissement (*SVZ*), l'écart ($\Delta SVZ$) de l'état d'alimentation du lotissement (*SVZ*) étant déterminé par rapport à une valeur théorique de l'état d'alimentation ($XS_{SVZ}$) et une variation de température d'alimentation de réseau ($\Delta VLT_{reseau}$) ou une température d'alimentation de réseau ($VLT_{reseau}$) pour la température d'alimentation de réseau ($VLT_{réseau}$) étant définie en fonction de la valeur de l'écart, et

- la variation de température d'alimentation de réseau ($\Delta VLT_{réseau}$) ou la température d'alimentation de réseau ($VLT_{réseau}$) étant déterminée en plus en fonction de l'état d'alimentation du lotissement *(SVZ)* et également en fonction d'une consigne de gestion d'accumulation (*SPMV*), laquelle tient compte de l'état de charge d'accumulation (*SVZ*) des accumulateurs thermiques (6, 5) centraux et/ou décentralisés raccordés dans le réseau de distribution de chaleur (3).

**2.** Procédé selon la revendication 1, **caractérisé en ce que** lors de la détermination de l'état d'alimentation du lotissement (*SLZ*), on prend en même temps en considération la différence ($\Delta VLT_{réseau\text{-}HK}$) de la température d'alimentation de réseau ($VLT_{réseau}$) dans le réseau de distribution de chaleur (3) et de la température d'alimentation dans au moins un circuit de chauffage ($VLT_{HK}$) d'un bâtiment (2) du lotissement (1).

**3.** Procédé selon l'une quelconque des revendications précédentes, **caractérisé en ce que** l'état d'alimentation du lotissement (*SVZ*), la variation de température d'alimentation de réseau ($\Delta VLT_{réseau}$), la température d'alimentation de réseau ($VLT_{réseau}$) et/ou la consigne de gestion d'accumulation (*SPMV*) sont déterminés en utilisant une logique floue.

**4.** Procédé selon l'une quelconque des revendications précédentes, **caractérisé en ce que** la dépendance de la variation de température d'alimentation de réseau ($\Delta VLT_{reseau}$) ou la température d'alimentation de réseau ($VLT_{réseau}$) en fonction de la température extérieure ($\vartheta_A$) dans le lotissement (1) est apprise en tant que caractéristique de la variation de température d'alimentation de réseau ($\Delta VLT_{réseau}(\vartheta_A)$ ou de la température d'alimentation de réseau ($VLT_{réseau}(\vartheta_A)$) et pour une température extérieure actuelle ($\vartheta_A$), une variation de la température d'alimentation ($\Delta VLT_{réseau}$) ou une température d'alimentation de réseau ($VLT_{réseau}$) est lue à partir de la caractéristique et est utilisée comme valeur de base pour la commande du distributeur central de chaleur (4).

**5.** Procédé selon l'une quelconque des revendications précédentes, **caractérisé en ce que** la variation de la température d'alimentation ($\Delta VLT_{réseau}$) ou la température d'alimentation de réseau ($VLT_{réseau}$) est déterminée en plus en fonction de l'état d'alimentation du lotissement (*SVZ*) et également en fonction de la température d'alimentation de réseau ($VLT_{réseau}$).

**6.** Procédé selon l'une quelconque des revendications précédentes, **caractérisé en ce que** lors de la détermination de la consigne de gestion d'accumulation (*SPMV*), on prend en considération un degré de charge (*Phi_KWK*) du distributeur central de chaleur (4) et/ou le prix du courant (*SP*).

**7.** Procédé selon l'une quelconque des revendications précédentes, **caractérisé en ce que** lors de la détermination de la variation de la température d'alimentation ($\Delta VLT_{réseau}$), de la température d'alimentation de réseau ($VLT_{réseau}$) et/ou de la consigne de gestion d'accumulation (*SPMV*), on prend en considération les données d'un pronostic météorologique (*WP*) et/ou les données caractéristiques du bâtiment.

**8.** Dispositif de commande de l'alimentation en chaleur de consommateurs thermiques dans des bâtiments (2) d'un lotissement (1) au moyen d'un distributeur d'énergie thermique central (4) comprenant un ordinateur de commande (8) équipé d'interfaces de communication pour recevoir et émettre des données, **caractérisé en ce que** des commandes des accumulateurs thermiques centraux et/ou décentralisés (6, 5) peuvent être raccordées à l'ordinateur de commande (8) et **en ce que** l'ordinateur de commande (8) est agencé

- pour déterminer, à partir des états d'alimentation de bâtiments reçus (*GTZ_i*), affichant respectivement le besoin en chaleur des consommateurs thermiques dans un bâtiment (2) du lotissement (1), un état d'alimentation du lotissement (*SVZ*), lequel affiche le besoin en chaleur de tout le lotissement (1),
- pour recevoir les états de charge d'accumulation (*SLZ_j*) des commandes des accumulateur thermiques centraux et/ou décentralisés (5, 6), et
- pour produire en tant que signal de commande une variation de température d'alimentation de réseau ($\Delta VLT_{réseau}$) pour la température d'alimentation de réseau ($VLT_{réseau}$) ou la température d'alimentation de réseau ($VLT_{réseau}$) déterminée ($\Delta VLT_{réseau}$ ou $VLT_{réseau}$) en fonction de cet état d'alimentation du lotissement (*SVZ*) et de ces états de charge d'accumulation (*SLZ_i*) et le délivrer au distributeur central de chaleur (4).

**9.** Dispositif selon la revendication 8, **caractérisé en ce que** l'ordinateur de commande (8) est agencé pour déterminer l'écart ($\Delta SVZ$) de l'état d'alimentation du lotissement (*SVZ*) par rapport à une valeur théorique ($XS_{svz}$) de l'état d'alimentation du lotissement (*SVZ*) et déterminer le signal de commande ($\Delta VLT_{réseau}$ ou $VLT_{réseau}$) en fonction de cet écart ($\Delta SVZ$).

**10.** Dispositif selon la revendication 8 ou 9, **caractérisé en ce que** l'ordinateur (8) est agencé pour envoyer respectivement une consigne de gestion d'accumulation (*SPMV_j*) aux commandes raccordées des accumulateurs thermiques centraux et/ou décentralisés individuels (6, 5).

Fig. 1

Fig. 2

Fig. 3

## Zugehörigkeitsfunktionen GuVZ

Stark
unterversorgt

Unterversorgt

neutral

Zugehörigkeit

1

0

-100

-50

Fig. 4

## Zugehörigkeitsfunktionen GueVZ

neutral

Überversorgt

Stark
überversorgt

Zugehörigkeit

1

0

0

50

100

Fig. 5

## Zugehörigkeitsfunktionen SVZ

Fig. 6

| Regelbasis | | |
|---|---|---|
| GuVZ | GueVZ | SVZ |
| Stark Unterversorgt | Neutral | Stark Unterversorgt |
| Stark Unterversorgt | Überversorgt | Stark Unterversorgt |
| Stark Unterversorgt | Stark Überversorgt | Stark Unterversorgt |
| Unterversorgt | Neutral | Unterversorgt |
| Unterversorgt | Überversorgt | Unterversorgt |
| Unterversorgt | Stark Überversorgt | Neutral |
| Neutral | Neutral | Neutral |
| Neutral | Überversorgt | Überversorgt |
| Neutral | Stark Überversorgt | Stark Überversorgt |

Fig. 7

Fig. 8

EP 3 091 294 B1

Fig. 9

Zugehörigkeitsfunktionen $\Delta VLT_{Netz-HK}$

Fig. 10

| Regelbasis | | | |
|---|---|---|---|
| GuVZ | GueVZ | $\Delta VLT_{\text{Netz-HK}}$ | SVZ |
| Stark Unterversorgt | Neutral | Sehr gering | Stark Unterversorgt |
| Stark Unterversorgt | Neutral | Gering | Stark Unterversorgt |
| Stark Unterversorgt | Neutral | Mittel | Stark Unterversorgt |
| Stark Unterversorgt | Neutral | Hoch | Unterversorgt |
| Stark Unterversorgt | Überversorgt | Sehr gering | Stark Unterversorgt |
| Stark Unterversorgt | Überversorgt | Gering | Stark Unterversorgt |
| Stark Unterversorgt | Überversorgt | Mittel | Stark Unterversorgt |
| Stark Unterversorgt | Überversorgt | Hoch | Unterversorgt |
| Stark Unterversorgt | Stark Überversorgt | Sehr gering | Stark Unterversorgt |
| Stark Unterversorgt | Stark Überversorgt | Gering | Stark Unterversorgt |
| Stark Unterversorgt | Stark Überversorgt | Mittel | Unterversorgt |
| Stark Unterversorgt | Stark Überversorgt | Hoch | Unterversorgt |
| Unterversorgt | Neutral | Sehr gering | Unterversorgt |
| Unterversorgt | Neutral | Gering | Unterversorgt |
| Unterversorgt | Neutral | Mittel | Unterversorgt |
| Unterversorgt | Neutral | Hoch | Neutral |
| Unterversorgt | Überversorgt | Sehr gering | Unterversorgt |
| Unterversorgt | Überversorgt | Gering | Unterversorgt |
| Unterversorgt | Überversorgt | Mittel | Unterversorgt |
| Unterversorgt | Überversorgt | Hoch | Neutral |
| Unterversorgt | Stark Überversorgt | Sehr gering | Unterversorgt |
| Unterversorgt | Stark Überversorgt | Gering | Unterversorgt |
| Unterversorgt | Stark Überversorgt | Mittel | Neutral |
| Unterversorgt | Stark Überversorgt | Hoch | Neutral |
| Neutral | Neutral | Sehr gering | Neutral |
| Neutral | Neutral | Gering | Neutral |
| Neutral | Neutral | Mittel | Neutral |
| Neutral | Neutral | Hoch | Überversorgt |
| Neutral | Überversorgt | Sehr gering | Neutral |
| Neutral | Überversorgt | Gering | Überversorgt |
| Neutral | Überversorgt | Mittel | Überversorgt |
| Neutral | Überversorgt | Hoch | Überversorgt |
| Neutral | Stark Überversorgt | Sehr gering | Überversorgt |
| Neutral | Stark Überversorgt | Gering | Stark Überversorgt |
| Neutral | Stark Überversorgt | Mittel | Stark Überversorgt |
| Neutral | Stark Überversorgt | Hoch | Stark Überversorgt |

Fig. 11

Fig. 12

## Zugehörigkeitsfunktionen $\Delta VLT_{Netz,SVZ}$

Fig. 13

## Zugehörigkeitsfunktionen $VLT_{Netz}$

Fig. 14

Fig. 15

## Zugehörigkeitsfunktionen SLZ

Fig. 16

## Zugehörigkeitsfunktionen SP

Fig. 17

## Zugehörigkeitsfunktionen SPMV

Fig. 18

| Regelbasis | | |
|---|---|---|
| Strompreis SP | Speicherladezustand SLZ | Speichermanagement SPMV |
| Gering | Leer | Ladezustand beibehalten |
| Gering | Fast Leer | Ladezustand beibehalten |
| Gering | Mittel | Speicher entladen |
| Gering | Fast Voll | Speicher entladen |
| Gering | Voll | Speicher entladen |
| Mittel | Leer | Speicher laden |
| Mittel | Fast Leer | Speicher laden |
| Mittel | Mittel | Ladezustand beibehalten |
| Mittel | Fast Voll | Speicher entladen |
| Mittel | Voll | Speicher entladen |
| Hoch | Leer | Speicher laden |
| Hoch | Fast Leer | Speicher laden |
| Hoch | Mittel | Speicher laden |
| Hoch | Fast Voll | Speicher laden |
| Hoch | Voll | Ladezustand beibehalten |

Fig. 19

## Zugehörigkeitsfunktionen Phi$_{KWK}$

Fig. 20

| Regelbasis | | | |
|---|---|---|---|
| Belastungsgrad KWK-Anlage Phi$_{KWK}$ | Strompreis SP | Speicherladezustand SLZ | Speichermanagement SPMV |
| Gering | Gering | Leer | Ladezustand beibehalten |
| Gering | Gering | Fast Leer | Ladezustand beibehalten |
| Gering | Gering | Mittel | Speicher entladen |
| Gering | Gering | Fast Voll | Speicher entladen |
| Gering | Gering | Voll | Speicher entladen |
| Gering | Mittel | Leer | Speicher laden |
| Gering | Mittel | Fast Leer | Speicher laden |
| Gering | Mittel | Mittel | Ladezustand beibehalten |
| Gering | Mittel | Fast Voll | Speicher entladen |
| Gering | Mittel | Voll | Speicher entladen |
| Gering | Hoch | Leer | Ladezustand beibehalten |
| Gering | Hoch | Fast Leer | Ladezustand beibehalten |
| Gering | Hoch | Mittel | Ladezustand beibehalten |
| Gering | Hoch | Fast Voll | Ladezustand beibehalten |
| Gering | Hoch | Voll | Speicher laden |

Fig. 21a

41

| Mittel | Gering | Leer | Ladezustand beibehalten |
|--------|--------|------|-------------------------|
| Mittel | Gering | Fast Leer | Ladezustand beibehalten |
| Mittel | Gering | Mittel | Speicher entladen |
| Mittel | Gering | Fast Voll | Speicher entladen |
| Mittel | Gering | Voll | Speicher entladen |
| Mittel | Mittel | Leer | Speicher laden |
| Mittel | Mittel | Fast Leer | Speicher laden |
| Mittel | Mittel | Mittel | Ladezustand beibehalten |
| Mittel | Mittel | Fast Voll | Speicher entladen |
| Mittel | Mittel | Voll | Speicher entladen |
| Mittel | Hoch | Leer | Speicher laden |
| Mittel | Hoch | Fast Leer | Speicher laden |
| Mittel | Hoch | Mittel | Speicher laden |
| Mittel | Hoch | Fast Voll | Ladezustand beibehalten |
| Mittel | Hoch | Voll | Ladezustand beibehalten |
| Hoch | Gering | Leer | Ladezustand beibehalten |
| Hoch | Gering | Fast Leer | Ladezustand beibehalten |
| Hoch | Gering | Mittel | Speicher entladen |
| Hoch | Gering | Fast Voll | Speicher entladen |
| Hoch | Gering | Voll | Speicher entladen |
| Hoch | Mittel | Leer | Speicher laden |
| Hoch | Mittel | Fast Leer | Speicher laden |
| Hoch | Mittel | Mittel | Speicher laden |
| Hoch | Mittel | Fast Voll | Ladezustand beibehalten |
| Hoch | Mittel | Voll | Ladezustand beibehalten |
| Hoch | Hoch | Leer | Speicher laden |
| Hoch | Hoch | Fast Leer | Speicher laden |
| Hoch | Hoch | Mittel | Ladezustand beibehalten |
| Hoch | Hoch | Fast Voll | Ladezustand beibehalten |
| Hoch | Hoch | Voll | Ladezustand beibehalten |

**Fig. 21b**

| Regelbasis | | | |
|---|---|---|---|
| $VLT_{Netz}$ | $\Delta VLT_{Netz,SVZ}$ | SPM | $\Delta VLT_{Netz}$ |
| Niedrig | Negativ | Speicher entladen | Absenken |
| Niedrig | Negativ | Ladezustand beibehalten | Absenken |
| Niedrig | Negativ | Speicher laden | Anheben |
| Niedrig | Neutral | Speicher entladen | Unverändert |
| Niedrig | Neutral | Ladezustand beibehalten | Unverändert |
| Niedrig | Neutral | Speicher laden | Anheben |
| Niedrig | Positiv | Speicher entladen | Anheben |
| Niedrig | Positiv | Ladezustand beibehalten | Anheben |
| Niedrig | Positiv | Speicher laden | Anheben |
| Mittel | Negativ | Speicher entladen | Absenken |
| Mittel | Negativ | Ladezustand beibehalten | Absenken |
| Mittel | Negativ | Speicher laden | Anheben |
| Mittel | Neutral | Speicher entladen | Unverändert |
| Mittel | Neutral | Ladezustand beibehalten | Unverändert |
| Mittel | Neutral | Speicher laden | Anheben |
| Mittel | Positiv | Speicher entladen | Anheben |
| Mittel | Positiv | Ladezustand beibehalten | Anheben |
| Mittel | Positiv | Speicher laden | Anheben |
| Hoch | Negativ | Speicher entladen | Absenken |
| Hoch | Negativ | Ladezustand beibehalten | Absenken |
| Hoch | Negativ | Speicher laden | Unverändert |
| Hoch | Neutral | Speicher entladen | Unverändert |
| Hoch | Neutral | Ladezustand beibehalten | Unverändert |
| Hoch | Neutral | Speicher laden | Unverändert |
| Hoch | Positiv | Speicher entladen | Anheben |
| Hoch | Positiv | Ladezustand beibehalten | Anheben |
| Hoch | Positiv | Speicher laden | Anheben |

**Fig. 22**

Zugehörigkeitsfunktionen $\Delta VLT_{Netz}$

Fig. 23

Zugehörigkeitsfunktionen $\Delta VLT_{Netz}$

Fig. 24

Fig. 25

Labels in figure:
- 8 — Berechnung SVZ
- SVZ
- 2 — Siedlung; Gebäude n; Gebäude 2; Gebäude 1 incl. Heizkreisregelung, Gebäude-integrierte Speicher
- 1 — Siedlung
- 5
- $GVZ_{1...n}$
- $VLT_{HK1...n}$
- $SLZ_{GiSP1...GiSPm}$
- 6 — Speicher; Speicher k; Speicher 2; Speicher 1
- $SLZ_{SP1...SPk}$
- Wärme-netz
- $Q_{Gebäude}$
- $Q_{SPLaden}$
- $Q_{SPEntladen}$
- $VLT_{Netz}$
- 4
- $\Delta VLT_{Netz}$
- $SPMV_{GiSP1...GiSPm}$
- $SPMV_{SP1...SPk}$
- 8 — Berechnung ΔVLT und SPMV
- Wetterprognose
- $Phi_{KWK}$
- SP
- $XS_{SVZ}$
- $\Delta SVZ$

45

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10003914 A1
- DE 4321574 A1
- DE 10345580 A1
- WO 03052536 A2
- EP 1645928 A1
- US 5479358 A
- DE 19694189 A1
- DE 19836842 A1
- EP 1933220 B1
- EP 2009536 B1